(19) Europäisches Patentamt
European Patent Office
Office européen des brevets

(11) **EP 1 815 376 B1**

(12) **EUROPEAN PATENT SPECIFICATION**

(45) Date of publication and mention
of the grant of the patent:
**06.01.2010 Bulletin 2010/01**

(51) Int Cl.:
***G06F 19/00*** (2006.01)   ***G05B 23/02*** (2006.01)

(21) Application number: **05851272.4**

(22) Date of filing: **28.10.2005**

(86) International application number:
**PCT/US2005/039122**

(87) International publication number:
**WO 2006/050187 (11.05.2006 Gazette 2006/19)**

(54) **METHOD FOR TURBINE MAINTENANCE**

WARTUNGSVERFAHREN FÜR TURBINEN

PROCEDE D'ENTRETIEN DE TURBINE

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.10.2004 US 622780 P**

(43) Date of publication of application:
**08.08.2007 Bulletin 2007/32**

(73) Proprietors:
• **Walker, Ronald S.**
**Orlando, FL 32825 (US)**
• **Foster, Philip S.**
**Orlando, FL 32803 (US)**

(72) Inventors:
• **Walker, Ronald S.**
**Orlando, FL 32825 (US)**
• **Foster, Philip S.**
**Orlando, FL 32803 (US)**

(74) Representative: **Howick, Nicholas Keith et al**
**Carpmaels & Ransford**
**43-45 Bloomsbury Square**
**London**
**WC1A 2RA (GB)**

(56) References cited:
US-A1- 2003 083 827   US-A1- 2004 148 129
US-A1- 2004 181 369   US-A1- 2005 131 656
US-A1- 2005 246 068   US-A1- 2006 100 915
US-B2- 6 907 381   US-B2- 6 909 960

**Description**

**BACKGROUND**

The present invention relates to a method and system for correlating operational conditions of a gas turbine to optimized maintenance considerations.

Well-planned maintenance programs allow for maximum equipment availability and low maintenance costs. Advance planning for maintenance is a necessity for utility, industrial and cogeneration plants in order to minimize downtime. Further, the correct performance of planned maintenance and inspection provides direct benefits in reduced forced outages and increased starting reliability, which in turn reduces unscheduled repair downtime.

Parts unique to a gas turbine requiring the most careful attention are those associated with the combustion process together with those exposed to high temperatures from the hot gases discharged from the combustion system. They are called the hot-gas-path parts and include combustion liners, end caps, fuel nozzle assemblies, crossfire tubes, transition pieces, turbine nozzles, turbine stationary shrouds and turbine buckets.

There are many factors that can influence equipment life. Starting cycle, power setting, fuel, and level of steam or water injection are key factors in determining the maintenance interval requirements as these factors directly influence the life of critical gas turbine parts.

Gas turbines typically wear in different ways and therefore, have differing wear rates depending on the type of service-duties the machine performs. Thermal mechanical fatigue is the dominant limiter of life for cyclic duty or peaking machines, while rupture, creep deflection, oxidation, and corrosion are the dominant limiters of life for continuous duty or baseline machines. Both cyclic duty machines and continuous duty machines are limited by high-cycle fatigue rubs and wears. Typically, cyclic duty or peaking machines require maintenance and inspection long before continuous duty or baseline machines because of the harsher conditions generated by the cyclic duty or peaking machines.

Currently, many manufacturers base gas turbine maintenance requirements on independent counts of starts and hours. Whichever criteria limit is first reached determines the maintenance interval. Alternatively, manufacturers convert each start cycle to an equivalent number of operating hours with inspection intervals based on the equivalent hours count regardless of the load, cycles, or actual operating conditions. Both of these methods leads to maintenance intervals which are either unnecessarily early or catastrophically tardy.

There are equivalencies within a wear mechanism that must be considered. Influences such as fuel type and quality, firing temperature setting, and amount of steam or water injection are considered with regard to the hours-based criteria. Startup rate and the number of trips are considered with regard to the starts-based criteria. In both cases, these influences may act to improperly reduce the maintenance intervals.

Fuels burned in gas turbines range from clean natural gas to residual oils. The fuel used impacts maintenance yet this is typically not considered. Heavier hydrocarbon fuels have a maintenance factor ranging from three to four for residual fuel and two to three for crude oil fuels. These fuels generally release a higher amount of radiant thermal energy, which results in a subsequent reduction in combustion hardware life, and frequently contain corrosive elements such as sodium, potassium, vanadium and lead that can lead to accelerated hot corrosion of turbine nozzles and buckets. In addition, some elements in these fuels can cause deposits either directly or through compounds formed with inhibitors that are used to prevent corrosion. These deposits impact performance and can lead to a need for more frequent maintenance.

Significant operation at peak load, because of the higher operating temperatures, will require more frequent maintenance and replacement of hot-gas-path components. For a GE MS7001EA turbine, each hour of operation at peak load firing temperature (+100°F/56°C) is the same, from a bucket parts life standpoint, as six hours of operation at base load. This type of operation will result in a maintenance factor of six. Higher firing temperature reduces hot-gas-path parts lives while lower firing temperature increases parts lives. This provides an opportunity to balance the negative effects of peak load operation by periods of operation at part load. It would take six hours of operation at -100°F/56°C under base conditions to compensate for one hour operation at +100°F/56°C over base load conditions.

Current methods relating to maintenance considerations fail to accurately determine turbine maintenance and operating considerations. These methods fail to account for dominant limiters of life such as load and operating temperature. These methods also fail to account for the types of service duties the machine performs. Because the current prior art leaves room for improvement, the currently-claimed invention is necessary for accurately determining turbine maintenance and operating considerations.

US 2004/181369 describes a process for a maintenance procedure in a turbine.

**SUMMARY**

A turbine and method for determining turbine maintenance is disclosed. The method for determining turbine maintenance may comprise the steps of recording a number of part load starts, base load starts, fast starts, full speed no load trips, and load trips; forming a weighted equivalent starts as a weighted summation of the part load starts, base load starts, fast starts, full speed no load trips, and load trips; comparing the weighted equivalent starts to a predetermined threshold, and if the weighted equivalent starts exceeds the predetermined threshold, initiating the maintenance procedure. The method for determining turbine maintenance may also comprise the steps of recording the number of fast starts, normal starts, and elapsed time starts from shutdown to restart; forming a weighted equivalent starts as a weighted combination of fast starts, normal starts, and elapsed time starts from shutdown to restart; comparing the weighted equivalent starts to a predetermined threshold and if the weighted equivalent starts exceeds the predetermined threshold, initiating the maintenance procedure. The turbine maintenance procedure can accurately determine turbine maintenance and operating considerations, especially for hot gas path and rotor parts.

A turbine which determines turbine maintenance is also disclosed. The turbine comprises a part load starts counter for determining part load starts; a base load starts counter for determining base load starts; a full speed no load trips counter for determining full speed no load trips; a load trips counter for determining load trips; a fast starts counter for determining fast starts; a normal starts counter for determining normal starts; and an elapsed time detector for determining time between shutdown and restart. The turbine further comprises a device for determining a first weighted equivalent starts as a weighted summation of the part load starts; the base load starts; the fast starts; the full speed no load trips; and the load trips, and a device for determining a second weighted equivalent starts as a combination of the fast starts, the normal starts, and the elapsed time between shutdown and restart. The turbine also comprises a comparator capable of comparing the first weighted equivalent starts to a first predetermined threshold and if the first weighted equivalent starts exceeds the predetermined threshold, the turbine initiates a first maintenance procedure, and a second comparator capable of comparing the second weighted equivalent starts to a second predetermined threshold and if the second weighted equivalent starts exceeds the second predetermined threshold, the turbine initiates a second maintenance procedure.

## SUMMARY OF THE FIGURES

Figure 1 is a flow diagram of the successful starts counter.
Figure 2 is a flow diagram of the attempted starts counter.
Figure 3 is a flow diagram of the part and base load starts counter.
Figure 4 is a flow diagram of temperature start type.
Figure 4A is a flow diagram of a temperature T1 start.
Figure 4B is a flow diagram of a temperature T2 start.
Figure 4C is a flow diagram of a temperature T3 start.
Figure 4D is a flow diagram of a temperature T4 start.
Figure 5 is a flow diagram of the trips counters.

## DESCRIPTION

In accordance with this invention it has been found that a system for monitoring and correlating data related to maintenance considerations for gas turbines is a highly effective method of predicting and scheduling maintenance intervals for gas turbines. The present method for turbine maintenance is useful specifically on a GEK 3620G Heavy-duty gas turbine, but may also be useful for determining turbine operating and maintenance considerations for other types and models of gas turbines. The present invention will be described with reference to the various figures which form and integral part of the disclosure. In the figures, similar elements are numbered accordingly.

There are many factors that influence the maintenance schedules of gas turbines. The focus of the maintenance efforts in regards to the turbine is determined in large by and due to cyclic effects from trips, starts and loading which all affect the firing temperature. Also the fuel utilized and types of NOx systems utilized have associated maintenance factors. The present invention is a method which captures duty cycles, operation durations, and reliability of the unit to assist with specific operation. By capturing key factors affecting maintenance planning, our invention allows for accurate tracking of turbine maintenance factors and optimization of maintenance schedules.

To determine inspection and maintenance considerations for gas turbines, the present invention preferably monitors parameters which have been shown to correlate to specific maintenance requirements. Specifically relevant are successful starts, attempted starts, part load starts, base load starts, the turbine temperature starts, fast starts, base load fired time, turning gear operation time, hours based hot gas path intervals, trips, starting reliability, starts based hot gas path intervals, and starts-based rotor intervals. Fewer or more than the above listed considerations may be monitored without departing from the spirit and the scope of the present invention.

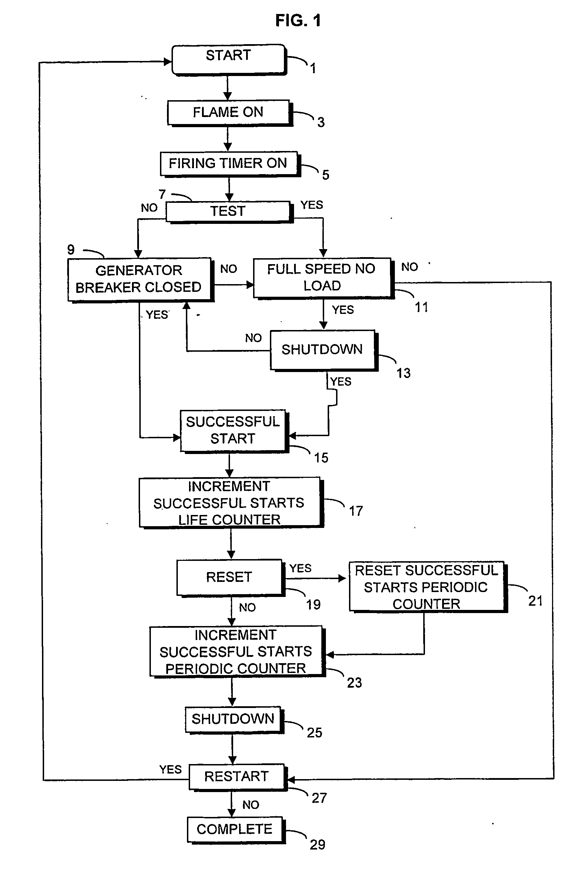

Figure 1 illustrates a preferred criterion for a successful start. In general, a successful start is indicated if the gas turbine is started with the intention of generating power for dispatch or testing. A start is considered a successful start if one of two criterion occurs. The first criterion for a successful start occurs when the turbine flame is ignited and the generator breaker is closed. If the unit trips prior to the closing of the generator breaker, a successful start is not indicated. If the unit trips after the closing of the generator breaker, a successful start is indicated. The second criterion for a successful start occurs when the turbine flame is ignited and the generator breaker remains open at full speed with no load and the turbine is proactively shutdown. The second criterion often arises when the turbine is started for testing purposes. Coincident with ignition of the turbine flame, a firing timer is initiated which runs the entire time the turbine flame is ignited. After a successful start is indicated, a successful starts life counter is incremented preferably by an integer. The successful starts life counter increments each successful start for the life of the turbine. A second periodic counter may also be present which can be reset at anytime by the operator. If the periodic counter is reset, the periodic counter will revert to zero. If the periodic counter is not reset, it will increment when a successful start occurs. A successful start does not reoccur until the turbine is shutdown and restarted.

Referring now to Figure 1, an exemplary embodiment of the criteria for a successful start is shown. Block 1 is the start block. Block 1 indicates an attempt to start the turbine. Block 1 leads to block 3 which determines if the turbine flame has been ignited. If the flame has been ignited, block 3 leads to block 5 indicating initiation of a firing timer. The firing timer at block 5 may run until the flame is no longer ignited. Block 5 leads to block 7 which is a test block and represents a decision between running the turbine such as for power generation or proactively shutting down the turbine. The turbine is often proactively shutdown prior to the closing of the generator breaker for testing purposes. If the turbine was started for the purpose of running the turbine, block 7 leads to block 9 which represents the open or closed status of the generator breaker. When the generator breaker at block 9 is closed, block 9 leads to block 15 and a successful start is indicated. If, however, the generator breaker is not closed at block 9, block 9 leads to block 11 which represents whether the turbine is at full speed but has no load. Similarly, if at or prior to block 7, a decision is made to test and shutdown the turbine, block 7 leads directly to block 11. If the turbine is at full speed but has no load at block 11, block 11 leads to block 13 which represents a shutdown of the turbine. A shutdown may occur when the turbine flame is no longer ignited. If the turbine is shutdown at block 13, block 13 leads to block 15 and a successful start is indicated. If, however, the turbine trips prior to shutdown at block 13, block 13 cycles back to restart at block 27 and a successful start is not indicated. Similarly, if the turbine is shutdown, trips, or loses flame prior to reaching full speed with no load at block 11, a successful start is not indicated and block 11 leads to restart block 27. Further, if a decision is made at test block 7 to test or shutdown the turbine after the turbine reaches full speed with no load at block 11 which leads to a shutdown at block 13, that decision may be reversed to a decision to run the turbine. If the decision is changed to run the turbine rather than shut the turbine down at block 13, block 13 leads to block 9. A successful start is indicated at block 15 if the generator breaker is closed at block 9.

When a successful start at block 15 is indicated, a successful starts life counter at block 17 is incremented preferably by an integer. Successful starts life counter at block 17 counts every time there is a successful start. The successful starts life counter is preferably not reset through the life of the turbine. Successful starts life counter at block 17 leads to a reset option at block 19. The reset option at block 19 leads to either an increment successful starts periodic counter at block 23 or a successful starts periodic counter reset at block 21. If the reset option at block 19 is not selected, block 19 leads directly to block 23 and a count is incremented to the increment successful starts periodic counter at block 23. If the reset option at block 19 is selected, the successful starts periodic counter is reset at block 21. Block 21 then leads to block 23 which increments the reset increment successful starts periodic counter. In an alternative embodiment the reset option at block 19 can be reset prior to increment of the successful starts life counter at block 17. In another embodiment, the reset option and successful starts periodic counter reset are independent of the turbine operation. Block 23 leads to block 25 which represents a shutdown. A successful start cannot reoccur until the turbine is shutdown at block 25. If the turbine is immediately restarted at block 27 after the shutdown at block 25, block 27 leads to start block 1 where the turbine is started again. If the turbine is not immediately restarted at block 27 after the shutdown at block 25, block 27 leads to block 29 where the successful starts criteria is complete until the turbine is started again at start block 1.

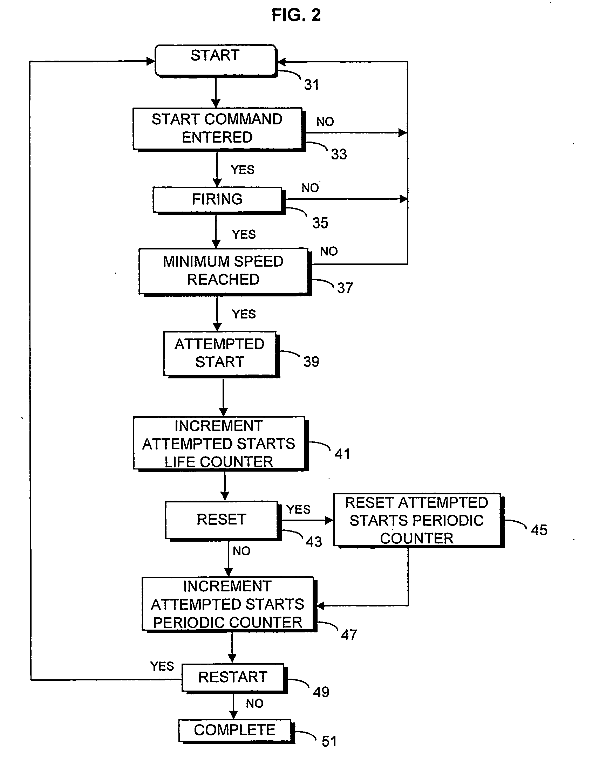

Figure 2 illustrates a preferred criteria for an attempted start. Generally, an attempted start can occur anytime the turbine is fired with the intention of generating power or testing. An attempted start is indicated when the turbine is started, fired, and a certain minimum speed is reached. After an attempted start is indicated, an attempted starts life counter is incremented. The attempted starts life counter increments each attempted start for the life of the turbine. A second attempted starts periodic counter may also be present which can be reset at anytime by the operator. If the attempted starts periodic counter is reset, the attempted starts periodic counter will revert to zero. If the attempted starts periodic counter is not reset, it will increment when an attempted start is indicated. An attempted start is not indicated if the turbine is not fired or does not reach a certain minimum speed. Further, cranking the unit for cool down or performing an off-line water wash does not constitute an attempted start. The criteria for an attempted start is satisfied anytime the criteria for a successful start is satisfied.

Referring specifically to Figure 2, an exemplary embodiment of the criteria for an attempted start is shown. Block 31 is the start block. Block 31 indicates an attempt to start the turbine. Block 31 leads to Block 33 which is satisfied anytime a start command is issued to the unit. Block 33 leads to block 35 which relays whether the turbine has been fired. If the turbine has been fired at block 35, block 35 leads to block 37 which indicates whether a certain minimum speed has been reached. In one embodiment, the minimum speed is above fourteen percent of the full speed. If the turbine reaches the specified minimum speed at block 37, an attempted start is indicated at block 39. If, however, the start command is not issued at block 33, the turbine is not fired at block 35, or the minimum speed is not reach at block 37, an attempted start at block 39 is not indicated and the path recycles back to start block 31.

An attempted starts life counter at block 41 is incremented preferably by an integer when an attempted start at block 39 is indicated. Attempted starts life counter at block 41 counts every time there is an attempted start. The attempted starts life counter is preferably not reset through the life of the turbine. Attempted starts life counter at block 41 leads to a reset option at block 43. The reset option at block 43 leads to either an increment attempted starts periodic counter at block 47 or an attempted starts periodic counter reset at block 45. If the reset option at block 43 is not selected, block 43 leads directly to block 47 and a count is incremented to the increment attempted starts periodic counter at block 47. If the reset option at block 43 is selected, the attempted starts periodic counter is reset at block 45. Block 45 then leads to block 47 which increments the reset increment successful starts periodic counter. In an alternative embodiment the reset option at block 43 can be reset prior to increment of the successful starts life counter at block 41. In another embodiment, the reset option and successful starts periodic counter reset are independent of the turbine operation. Block 47 leads to block 49 which represents a restart. If the turbine is immediately restarted at block 49, block 49 leads to start block 31 where the turbine is started again. If the turbine is not immediately restarted at block 49, block 49 leads to block 51 where the attempted starts criteria is complete until the turbine is started again at start block 31.

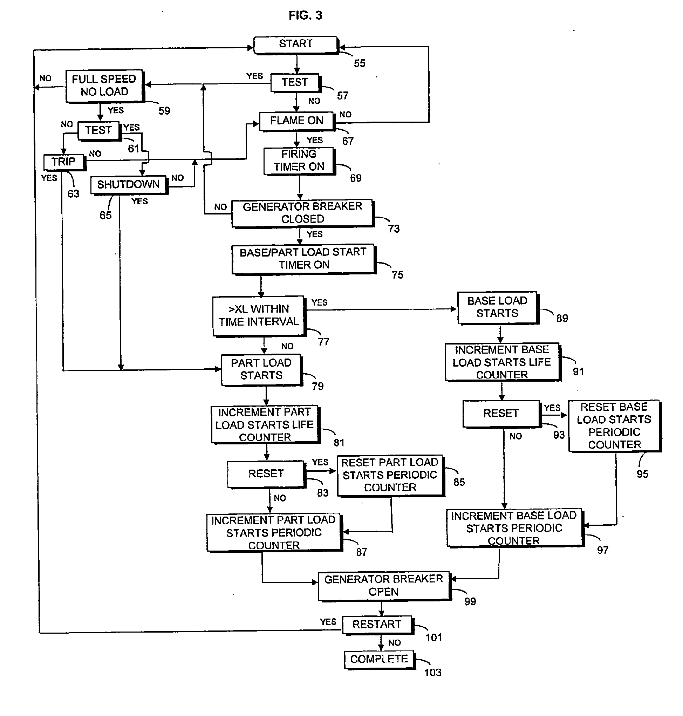

The number of base load starts and part load starts can be a preferred criterion for determining turbine operating and maintenance considerations. Figure 3 illustrates a preferred criterion for a base load start and a part load start. In general, when the gas turbine is successfully started and is dispatched to a load less than a specified load within a specified preferably time interval, it is a part load start. When the gas turbine is successfully started and is dispatched to a load greater than a specified load within a specified preferably time interval, it is a base load start. A part load start may also occur when the turbine is started with the intention of testing.

In general, a start can be considered a part load start if one of two preferred criterion occurs. The first preferred criterion for a part load start occurs when the turbine is started with the intention of generating power for dispatch. The turbine flame is ignited, the generator breaker closes, and the turbine is dispatched to a load less than a specified load within a specified time interval. If the above first preferred criterion is satisfied, a part load start is indicated. If, however, the turbine flame does not ignite, a part load start may not be indicated. If the turbine trips or is shutdown after the turbine flame ignites but the generator breaker does not close, a part load is indicated if the turbine is at full speed with no load based on the second preferred criteria. The second preferred criterion for a part load start occurs when the turbine is started with the intention of generating power for testing. In this instance, the turbine is started and reaches full speed with no load and prior to closing the generator breaker, the turbine is tripped or shutdown. If the above second preferred criterion is satisfied, a part load start is indicated. If, however, the unit trips or is shutdown prior to the turbine reaching full speed with no load, a part load start may not be indicated. After a part load start is indicated, a part load starts life counter is incremented preferably by an integer. The part load starts life counter increments each part load start for the life of the turbine. A second periodic counter may also be present which can be reset at anytime by the operator. If the periodic counter is reset, the periodic counter will revert to zero. If the periodic counter is not reset, it will increment when a part load start occurs. A part load start cannot reoccur until the generator breaker is opened.

Referring now to Figure 3, an exemplary embodiment of the criteria for a part load start is shown. Block 55 is the start block. Block 55 indicates an attempt to start the turbine. Block 55 leads to block 57 which is a test block. Test block 57 represents a decision between running the turbine for dispatch or proactively shutting down or tripping the turbine. The turbine is often proactively shutdown or tripped after the turbine is at full speed with no load for testing purposes. If the turbine is run for the purpose of testing, block 57 leads to block 59. Block 59 indicates whether the turbine reaches full speed with no load. If the turbine reaches full speed with no load, block 59 leads to block 61. If the turbine does not reach full speed with no load at block 59, block 59 leads back to start block 55. Block 61 is another test block which represents a decision between shutting down the turbine or tripping the turbine. If the decision is to shutdown the turbine, block 61 leads to block 65. A shutdown may occur when the turbine flame is no longer ignited. If the turbine is shutdown at block 65, block 65 leads to block 79 which indicates a part load start. If the decision is to trip the turbine or the turbine trips prior to shutdown but after the turbine reaches full speed with no load at block 59, block 61 leads to block 63. If the turbine trips at block 63, block 63 leads to block 79 which indicates a part load start. If, however, a decision is made at test block 61 to shutdown or trip the turbine but prior to tripping at block 63 or shutting down at block 65 a decision is made to run the turbine for dispatch, respective blocks 63 and 65 lead to block 67.

If the turbine is run for the purpose of dispatch, block 57 leads to block 67. Block 67 indicates whether the turbine flame is ignited. If the turbine flame is not ignited, block 67 cycles back to start block 55. If the turbine flame is ignited, block 67 leads to block 69. Block 69 indicates initiation of a firing timer. The firing timer at block 69 may run until the flame is no longer ignited. In one embodiment the firing timer represented at block 69 is the same firing timer as the one represented at block 5 in Figure 1. Block 69 leads to block 73 which represents the open or closed status of the generator breaker. When the generator breaker at block 73 is closed, block 73 leads to block 75 which indicates initiation of a base/part load start timer. If the generator breaker at block 73 is not closed, block 73 leads to block 59 which represents whether the turbine is at full speed but has no load. If the turbine has full speed with no load at block 59 and is shutdown at block 65 or trips at block 63, a part load start is indicated. If, however, the generator breaker at block 73 is not closed and the turbine does not reach full speed with no load at block 59, a part load start is not indicated and block 59 cycles back to start block 55. Base/part load start timer at block 75 leads to block 77. Block 77 indicates whether a specified load, denoted XL, has been reached within a specified preferably time interval. The specified time period may be set using the base/part load timer at block 75. If at block 77 the load is less than the specified load, XL, within the specified time interval, block 77 leads to block 79 and a part load start is indicated. In one particularly preferred embodiment, block 77 represents whether the load is greater than 60% or 100 Megawatts within 45 minutes of closing the generator breaker. If the load is not greater than 60% or 100 Megawatts at 45 minutes from the time of closing the generator breaker at block 77, block 77 leads to block 79 and a part load start is indicated.

When a part load start at block 79 is indicated, a part load starts life counter at block 81 is incremented preferably by an integer. Part load starts life counter at block 81 counts every time there is a part load start. The part load starts life counter is preferably not reset through the life of the turbine. Part load starts life counter at block 81 leads to a reset option at block 83. The reset option at block 83 leads to either an increment part load starts periodic counter at block 87 or a part load starts periodic counter reset at block 85. If the reset option at block 83 is not selected, block 83 leads directly to block 87 and a count is incremented to the increment part load starts periodic counter at block 87. If the reset option at block 83 is selected, the part load starts periodic counter is reset at block 85. Block 85 then leads to block 87 which increments the reset increment part load starts periodic counter. In an alternative embodiment the reset option at block 83 can be reset prior to increment of the part load starts life counter at block 81. In another embodiment, the reset option and part load starts periodic counter reset are independent of the turbine operation. Block 87 leads to block 99 which represents the open or closed status of the generator breaker. A part load start cannot reoccur until the generator breaker is opened at block 99. Block 99 then leads to block 101 which represents a restart for determining another base or part load start. A restart for determining a part load start can occur when the turbine is shutdown and restarted or merely when the generator breaker is opened and the criterion discussed above is fulfilled again. If a part load start is immediately restarted at block 101 after the opening of the generator breaker at block 99, block 101 leads to start block 55 where the cycle is started again. If the cycle is not immediately restarted at block 101 after the opening of the generator breaker at block 99, block 101 leads to block 103 where the part load starts criteria is complete until the cycle is started again at start block 55.

In general, a base load start occurs when the turbine is started with the intention of generating power for dispatch and the load is greater than that specified for a part load start within a specified interval of preferably time. The preferred criterion for a base load start includes ignition of the turbine flame, the generator breaker closing, and the turbine dispatching to a load greater than a specified load within a specified time interval. If the above preferred criterion is satisfied, a base load start can be indicated. If, however, the turbine flame does not ignite, a base load start may not be indicated. Further, if the turbine dispatches to a load less than a specified load within a specified time interval, a part load start, as discussed above, may occur rather than a base load start. After a base load start is indicated, a base load starts life counter is incremented preferably by an integer. The base load starts life counter increments each base load start for the life of the turbine. A second periodic counter may also be present which can be reset at anytime by the operator. If the periodic counter is reset, the periodic counter will revert to zero. If the periodic counter is not reset, it will increment when a base load start occurs. Similar to the part load start, a base load start cannot reoccur until the generator breaker is opened.

Referring again to Figure 3, an exemplary embodiment of the criteria for a base load start is shown. Block 55 is the start block. Block 55 indicates an attempt to start the turbine. Block 55 leads to block 57 which is a test block. Test block 57 represents a decision between running the turbine for dispatch or proactively shutting down or tripping the turbine. If the turbine is run for the purpose of testing, a base load start is not indicated. If the turbine is run for the purpose of dispatch, block 57 leads to block 67. Block 67 indicates whether the turbine flame is ignited. If the turbine flame is not ignited, block 67 cycles back to start block 55. If the turbine flame is ignited, block 67 leads to block 69. Block 69 indicates initiation of a firing timer. The firing timer at block 69 may run until the flame is no longer ignited. In one embodiment the firing timer represented at block 69 is the same firing timer as the one represented at block 5 in Figure 1. Block 69 leads to block 73 which represents the open or closed status of the generator breaker. When the generator breaker at block 73 is closed, block 73 leads to block 75 which indicates initiation of a base/part load start timer. If the generator breaker at block 73 is not closed, block 73 leads to block 59 and a base load start is not indicated. Base/part load start timer at block 75 leads to block 77. Block 77 indicates whether a specified load has been reached within a specified preferably time interval. The specified time period may be set using the base/part load timer at block 75. If at block 77 the load is greater than the specified load, denoted XL, within the specified time interval, block 77 leads to block 89 and a base load start is indicated. As noted above, if at block 77 the load is less than the specified load, XL, within the specified time interval, block 77 leads to block 79 and a part load start may be indicated. In one particularly preferred embodiment, block 77 represents whether the load is greater than 60% or 100 Megawatts within 45 minutes of closing the generator breaker. If the load is greater than 60% or 100 Megawatts at 45 minutes from the time of closing the generator breaker at block 77, block 77 leads to block 89 and a base load start is indicated.

When a base load start at block 89 is indicated, a base load starts life counter at block 91 is incremented preferably by an integer. Base load starts life counter at block 91 counts every time there is a base load start. The base load starts life counter is preferably not reset through the life of the turbine. Base load starts life counter at block 91 leads to a reset option at block 93. The reset option at block 93 leads to either an increment base load starts periodic counter at block 97 or a base load starts periodic counter reset at block 95. If the reset option at block 93 is not selected, block 93 leads directly to block 97 and a count is incremented to the increment base load starts periodic counter at block 97. If the reset option at block 93 is selected, the base load starts periodic counter is reset at block 95. Block 95 then leads to block 97 which increments the reset increment base load starts periodic counter. In an alternative embodiment the reset option at block 93 can be reset prior to increment of the base load starts life counter at block 91. In another embodiment, the reset option and base load starts periodic counter reset are independent of the turbine operation. Block 97 leads to block 99 which represents the open or closed status of the generator breaker. A base load start cannot reoccur until the generator breaker is opened at block 99. Block 99 then leads to block 101 which represents a restart for determining another base or part load start. A restart for determining another base load start may arise when the turbine is shutdown and.restarted or merely when the generator breaker is opened and the criterion discussed above is fulfilled again. If a base load start is immediately restarted at block 101 after the opening of the generator breaker at block 99, block 101 leads to start block 55 where the cycle is started again. If the cycle is not immediately restarted at block 101 after the opening of the generator breaker at block 99, block 101 leads to block 103 where the base load starts criteria is complete until the cycle is started again at start block 55.

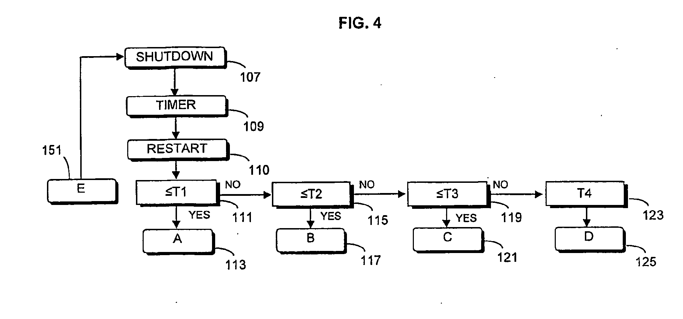

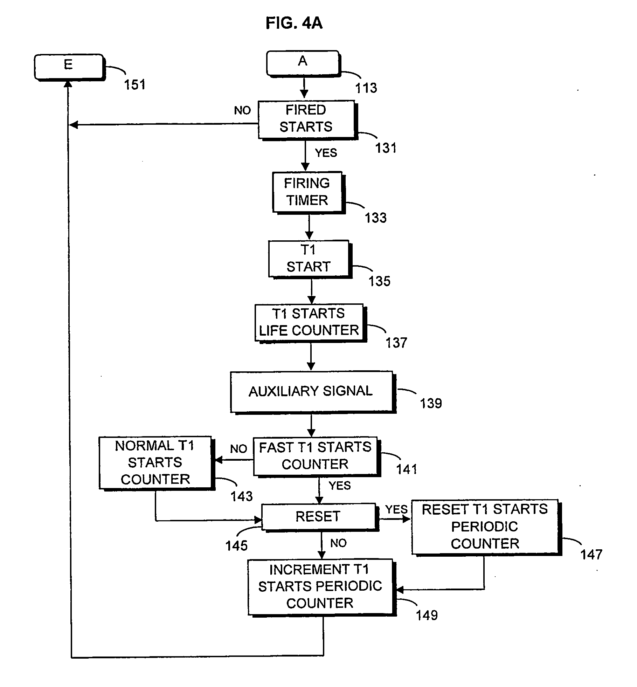

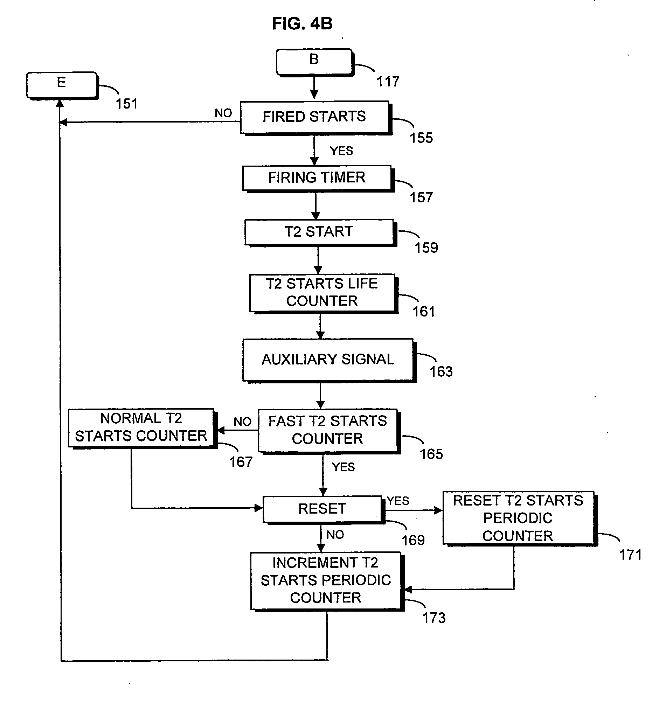

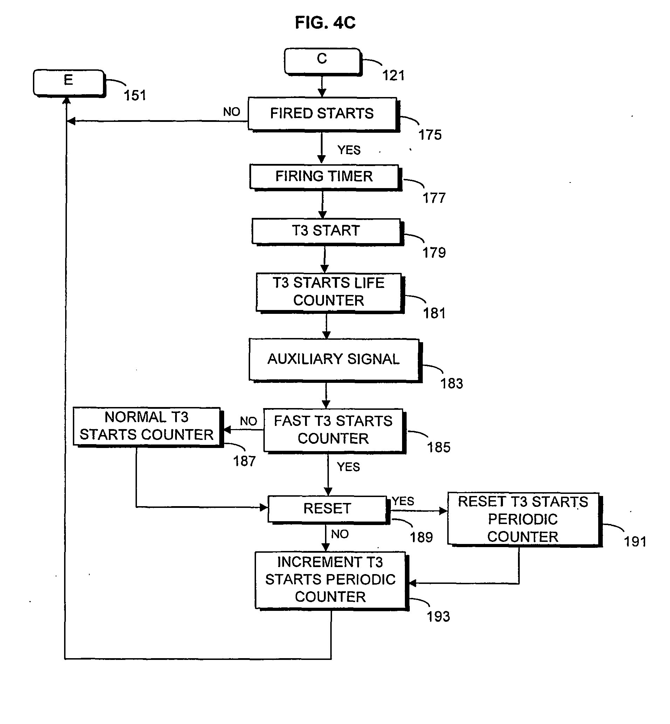

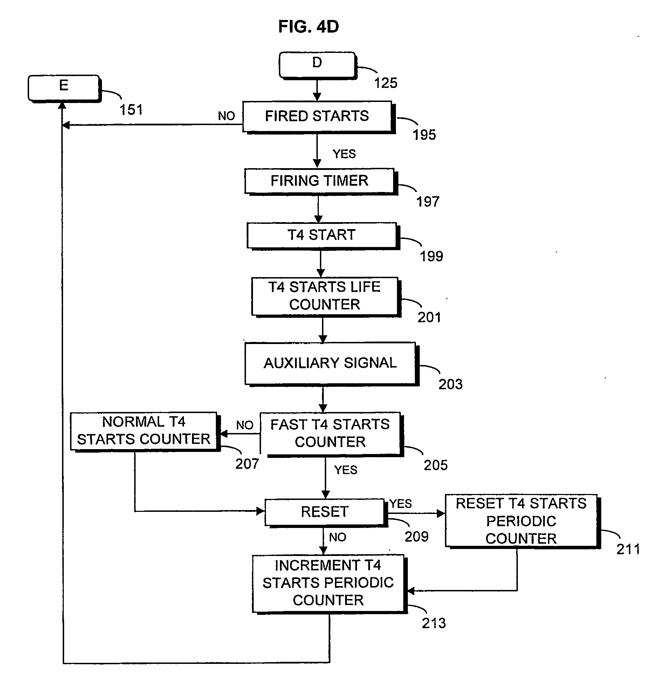

The temperature of the turbine at restart can be a preferred criterion for determining turbine operating and maintenance considerations. Figure 4 illustrates a preferred criterion for determining turbine temperature starts. A temperature start is indicated based on the length of time between the turbine shutdown and turbine restart. After the turbine is shutdown, a timer is initiated. The timer records from the time of turbine shutdown to the time of turbine restart. Turbine temperature starts are necessary in maintenance consideration because frequently the greater the time between a shutdown and a restart, the harder it is on the turbine and therefore, the shorter the time between maintenance intervals. Four temperature starts are shown in Figure 4, however, more than four temperature starts as well as less than four temperature starts may be indicated. In an alternative embodiment, only two temperature starts are indicated. In another alternative embodiment, fifty temperature starts are indicated. In yet another embodiment, the specific time between shutdown and restart is indicated.

Referring specifically to Figure 4, an exemplary embodiment for determining turbine temperature starts is shown. Block 107 indicates a turbine shutdown. Block 107 leads to block 109 which indicates initiation of a shutdown timer. Block 109 leads to block 110 which indicates a restart of the turbine. In one embodiment, a restart may occur when the turbine flame is ignited. In a preferred embodiment, a restart may occur when the unit is started and has attained complete combustion. Restart block 110 leads to block 111 which indicates whether the turbine is restarted within a specified time interval. If the turbine is restarted within the specified time interval, denoted as T1, block 111 leads to block 113. An "A" is shown in block 113 which leads to Figure 4A. Figure 4A illustrates whether a T1 start is indicated. In a preferred embodiment, the T1 time interval at block 111 is less than four hours. If the shutdown timer at block 109 indicates a time less than four hours at block 111, block 111 leads to block 113 to determine if a T1 start is indicated. If the turbine was restarted at block 110 at a time greater than the T1 time interval at block 111, block 111 leads to block 115. Block 115 specifies another time interval, denoted as T2. If the turbine is restarted within the specified T2 time interval, block 115 leads to block 117. A "B" is shown in block 117 which leads to Figure 4B. Figure 4B illustrates whether a T2 start is indicated. In a preferred embodiment, the T2 time interval at block 115 is between four and less than twenty hours. If the shutdown timer at block 109 indicates a time between four and less than twenty hours at block 115, block 115 leads to block 117 to determine if a T2 start is indicated. If the turbine was restarted at block 110 at a time greater than the T2 time interval at block 115, block 115 leads to block 119. Block 119 specifies another time interval, denoted as T3. If the turbine is restarted within the specified T3 time interval, block 119 leads to block 121. A "C" is shown in block 121 which leads to Figure 4C. Figure 4C illustrates whether a T3 start is indicated. In a preferred embodiment, the T3 time interval at block 119 is between twenty and forty hours. If the shutdown timer at block 109 indicates a time between twenty and forty hours at block 119, block 119 leads to block 121 to determine if a T3 start is indicated. If the turbine was restarted at block 110 at a time greater than the T3 time interval at block 119, block 119 leads to block 123. Block 123 specifies another time interval, denoted as T4. If the turbine is restarted within the specified T4 time interval, block 123 leads to block 125. A "D" is shown in block 125 which leads to Figure 4D. Figure 4D illustrates whether a T4 start is indicated. In a preferred embodiment, the T4 time interval at block 123 is anytime greater than forty hours. If the shutdown timer at block 109 indicates a time greater than forty hours at block 123, block 123 leads to block 125 to determine if a T4 start is indicated.

In an alternative embodiment, two timers are initiated. The first timer is run for the specified time intervals at blocks 111, 115, 119, and 123. The second timer runs for a specified time and indicates that the turbine may not be restarted until the specified time has run. In a preferred embodiment, the second timer is set at one hour. This second timer indicates that the turbine cannot be restarted after a shutdown until one hour has expired. Merely as an example, a TI start could be considered a hot start, a T2 start could be considered a warm start, a T3 start could be considered a lukewarm start, and a T4 start could be considered a cold start.

Figure 4A illustrates the preferred criterion for a T1 start. As discussed above, if the turbine is restarted within the T1 time interval, block 111 of Figure 4 leads to block 113 of Figure 4 and Figure 4A. Block 113 of Figure 4A then leads to block 131. Block 131 represents a fired start. If a fired start is not indicated at block 131, block 131 leads to block 151. An "E" is shown in block 151 and leads back to Figure 4. Block 151 on Figure 4 leads back to block 107 which represents a shutdown and the shutdown timer is reinitiated at block 109 until restart at block 110. If, however, a fired start is indicated at block 131 in Figure 4A, block 131 leads to block 133 which indicates initiation of a firing timer. In one embodiment, the firing timer at block 133 is the same firing timer as indicated in block 5 of Figure 1. Block 133 leads to block 135. Block 135 indicates a T1 start.

When a T1 start at block 135 is indicated, a T1 starts life counter at block 137 is incremented preferably by an integer. T1 starts life counter at block 137 counts every time there is a T1 start. The T1 starts life counter is preferably not reset through the life of the turbine. T1 starts life counter at block 137 leads to a fast/normal load auxiliary signal at block 139. Block 139 signals whether the turbine was started as a fast start or normal start. A fast start creates more stress than a normal start on the turbine and indicates that the turbine is brought up to full speed and load faster than a normal start. In one embodiment, the turbine is brought up to full speed and load approximately twice as fast with a fast start as with a normal start. In another embodiment, the operator indicates a fast start when the turbine is started. Block 139 leads to block 141 which represents a fast TI starts counter. If the T1 start is a fast T1 start, block 141 increments preferably by an integer and then leads to block 145 which is a reset option. If the T1 start is not a fast T1 start, block 141 does not increment and leads to block 143 where a normal T1 start is incremented. In one embodiment, normal T1 starts counter block 143 is the total of T1 starts at block 137 minus the number of fast T1 starts at block 141. Bock 143 also leads to reset option at block 145. The reset option at block 145 leads to either an increment T1 starts periodic counter at block 149 or a T1 starts periodic counter reset at block 147. If the reset option at block 145 is not selected, block 145 leads directly to block 149 and a count is incremented to the increment T1 starts periodic counter at block 149. If the reset option at block 145 is selected, the T1 starts periodic counter is reset at block 147. Block 147 then leads to block 145 which increments the reset increment T1 starts periodic counter. In an alternative embodiment the reset option at block 145 can be reset prior to increment of the T1 starts life counter at block 137. In another embodiment, the reset option and T1 starts periodic counter reset are independent of the turbine operation. Block 149 leads to block 151 which leads to block 107 in Figure 4 and the cycle is restarted.

Figure 4B illustrates the preferred criterion for a T2 start. As discussed above, if the turbine is restarted within the T2 time interval, block 115 of Figure 4 leads to block 117 of Figure 4 and Figure 4B. Block 117 of Figure 4B then leads to block 155 which represents a fired start. If a fired start is not indicated at block 155, block 155 leads to block 151 which leads to block 107 and the cycle is restarted. If, however, a fired start is indicated at block 155, block 155 leads to block 157 which indicates initiation of a firing timer. In one embodiment, the firing timer at block 157 is the same firing timer as indicated in block 5 of Figure 1. Block 157 leads to block 159. Block 159 indicates a T2 start.

When a T2 start at block 159 is indicated, a T2 starts life counter at block 161 is incremented preferably by an integer. T2 starts life counter at block 161 counts every time there is a T2 start. The T2 starts life counter is preferably not reset through the life of the turbine. T2 starts life counter at block 161 leads to a fast/normal load auxiliary signal at block 163. Block 163 signals whether the turbine was started as a fast start or normal start. Block 163 leads to block 165 which represents a fast T2 starts counter. If the T2 start is a fast T2 start, block 165 increments preferably by an integer and then leads to block 169 which is a reset option. If the T2 start is not a fast T2 start, block 165 does not increment and leads to block 167 where a normal T2 start is incremented. In one embodiment, normal T2 starts counter block 167 is the total of T2 starts at block 161 minus the number of fast T2 starts at block 165. Block 167 also leads to reset option at block 169. The reset option at block 169 leads to either an increment T2 starts periodic counter at block 173 or a T2 starts periodic counter reset at block 171. If the reset option at block 169 is not selected, block 169 leads directly to block 173 and a count is incremented to the increment T2 starts periodic counter at block 173. If the reset option at block 169 is selected, the T2 starts periodic counter is reset at block 171. Block 171 then leads to block 173 which increments the reset increment T2 starts periodic counter. In an alternative embodiment the reset option at block 169 can be reset prior to increment of the T2 starts life counter at block 161. In another embodiment, the reset option and T2 starts periodic counter reset are independent of the turbine operation. Block 173 leads to block 151 which leads to block 107 in Figure 4 and the cycle is restarted.

Figure 4C illustrates the preferred criterion for a T3 start. As discussed above, if the turbine is restarted within the T3 time interval, block 119 of Figure 4 leads to block 121 of Figure 4 and Figure 4C. Block 121 of Figure 4C then leads to block 175 which represents a fired start. If a fired start is not indicated at block 175, block 175 leads to block 151 which leads to block 107 and the cycle is restarted. If, however, a fired start is indicated at block 175, block 175 leads to block 177 which indicates initiation of a firing timer. In one embodiment, the firing timer at block 177 is the same firing timer as indicated in block 5 of Figure 1. Block 177 leads to block 179. Block 179 indicates a T3 start.

When a T3 start at block 179 is indicated, a T3 starts life counter at block 181 is incremented preferably by an integer. T3 starts life counter at block 181 counts every time there is a T3 start. The T3 starts life counter is preferably not reset through the life of the turbine. T3 starts life counter at block 181 leads to a fast/normal load auxiliary signal at block 183. Block 183 signals whether the turbine was started as a fast start or normal start. Block 183 leads to block 185 which represents a fast T3 starts counter. If the T3 start is a fast T3 start, block 185 increments preferably by an integer and then leads to block 189 which is a reset option. If the T3 start is not a fast T3 start, block 185 does not increment and leads to block 187 where a normal T3 start is incremented. In one embodiment, normal T3 starts counter block 187 is the total of T3 starts at block 181 minus the number of fast T3 starts at block 185. Block 187 also leads to reset option at block 189. The reset option at block 189 leads to either an increment T3 starts periodic counter at block 193 or a T3 starts periodic counter reset at block 191. If the reset option at block 189 is not selected, block 189 leads directly to block 193 and a count is incremented to the increment T3 starts periodic counter at block 193. If the reset option at block 189 is selected, the T3 starts periodic counter is reset at block 191. Block 191 then leads to block 193 which increments the reset increment T3 starts periodic counter. In an alternative embodiment the reset option at block 189 can be reset prior to increment of the T3 starts life counter at block 181. In another embodiment, the reset option and T3 starts periodic counter reset are independent of the turbine operation. Block 193 leads to block 151 which leads to block 107 in Figure 4 and the cycle is restarted.

Figure 4D illustrates the preferred criterion for a T4 start. As discussed above, if the turbine is restarted within the T4 time interval, block 123 of Figure 4 leads to block 125 of Figure 4 and Figure 4D. Block 125 of Figure 4D then leads to block 195 which represents a fired start. If a fired start is not indicated at block 195, block 195 leads to block 151 which leads to block 107 and the cycle is restarted. If, however, a fired start is indicated at block 195, block 195 leads to block 197 which indicates initiation of a firing timer. In one embodiment, the firing timer at block 197 is the same firing timer as indicated in block 5 of Figure 1. Block 197 leads to block 199. Block 199 indicates a T4 start.

When a T4 start at block 199 is indicated, a T4 starts life counter at block 201 is incremented preferably by an integer. T4 starts life counter at block 201 counts every time there is a T4 start. The T4 starts life counter is preferably not reset through the life of the turbine. T4 starts life counter at block 201 leads to a fast/normal load auxiliary signal at block 203. Block 203 signals whether the turbine was started as a fast start or normal start. Block 203 leads to block 205 which represents a fast T4 starts counter. If the T4 start is a fast T4 start, block 205 increments preferably by an integer and then leads to block 209 which is a reset option. If the T4 start is not a fast T4 start, block 205 does not increment and leads to block 207 where a normal T4 start is incremented. In one embodiment, normal T4 starts counter block 207 is the total of T4 starts at block 201 minus the number of fast T4 starts at block 205. Block 207 also leads to reset option at block 209. The reset option at block 209 leads to either an increment T4 starts periodic counter at block 213 or a T4 starts periodic counter reset at block 211. If the reset option at block 209 is not selected, block 209 leads directly to block 213 and a count is incremented to the increment T4 starts periodic counter at block 213. If the reset option at block 209 is selected, the T4 starts periodic counter is reset at block 211. Block 211 then leads to block 213 which increments the reset increment T4 starts periodic counter. In an alternative embodiment the reset option at block 209 can be reset prior to increment of the T4 starts life counter at block 201. In another embodiment, the reset option and T4 starts periodic counter reset are independent of the turbine operation. Block 213 leads to block 151 which leads to block 107 in Figure 4 and the cycle is restarted.

Starting reliability of the gas turbine is a preferred criterion for determining operating and maintenance considerations. Starting reliability is the percentage of turbine successful starts. Starting reliability can be determined by dividing the total number of successful starts by the total number of attempted starts. This number can be multiplied by one hundred to determine a starting reliability percentage. Starting reliability can be factored over the life of the turbine using the successful starts and attempted starts life counters or starting reliability can be factored over a period using the successful starts and attempted starts periodic counters.

Total base load fired time is also a preferred criterion for determining operating and maintenance considerations. When the turbine is at base load, a timer is initiated and determines how much time a turbine is at base load. In one embodiment, the total life base load fired time is indicated as well as a periodic base load fired time which may be reset. In a particularly preferred embodiment, when the timer reaches a specified time, a total base load fired time counter increments, preferably by an integer, to determine the amount of time a turbine is run at base load. A resettable periodic total base load fired time counter may also increment, preferably by an integer, when the timer reaches a specified time to determine the amount of time a turbine is run at base load for a particular period. In one embodiment, the total base load fired time counter increments, preferably by an integer, every time the base load timer reaches one hour. In another embodiment a total base load timer runs every time the turbine is at base load for the life of the turbine and a counter increments, preferably by an integer, every time the timer reaches a specified period of time.

Total turning gear operation time is a preferred criterion for determining operating and maintenance considerations. When the turbine is performing a turning gear operation, a turning gear timer is initiated and determines how much time a turbine is performing the turning gear operation. In one embodiment, the total turning gear operation time is indicated as well as a periodic turning gear operation time which may be reset. In a particularly preferred embodiment, when the timer reaches a specified time, a total turning gear operation time counter increments, preferably by an integer, to determine the amount of time a turbine is performing turning gear operations. A resettable periodic total turning gear operation time counter may also increment, preferably by an integer, when the timer reaches a specified time to determine the amount of time a turbine is performing turning gear operations for a particular period. In one embodiment, the total turning gear operation time counter increments, preferably by an integer, every time the turning gear timer reaches one hour.

Fast load starts are often harsher on turbine systems. As discussed above, a fast load start indicates that the turbine is brought up to load faster than a normal start. The total number of fast starts is often a preferred criterion used for determining operating and maintenance considerations. Fast start counters are indicated in Figures 4A, 4B, 4C, and 4D at blocks 141, 165, 185, and 205 respectively. A total fast start life counter may be present which increments, preferably by an integer, when a fast start is indicated. In one embodiment the total fast start counter increments every time a fast start counter increments at block 141, 165, 185, or 205. A periodic total fast starts counter may also increment every time a fast start occurs. The periodic total fast start counter can be reset by the operator.

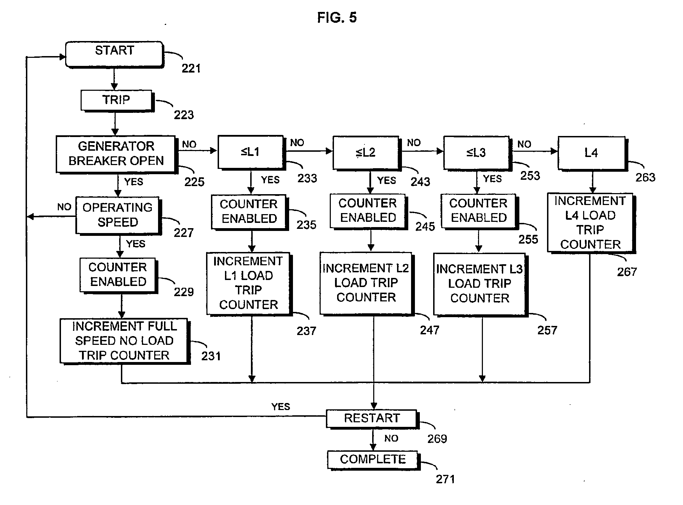

The total number of turbine trips is often a preferred criterion for determining turbine operating and maintenance considerations. Similarly, the total number of turbine trips at particular loads is also a preferred criterion for determining turbine operating and maintenance considerations. Figure 5 illustrates preferred criterion for determining the total number of turbine trips at particular loads. Five loads levels are indicated in Figure 5 including no load, L1 load, L2 load, L3 load, and L4 load. Less than five load levels may be used for determining operating and maintenance considerations. More than five load levels may also be used for determining operating and maintenance considerations. In one embodiment, percent load levels are used. In another embodiment, actual loads are used. In a particularly preferred embodiment, the number of trips at no load is counted, the number of trips at more than 0% load but less than 20% load is counted, the number of trips at 20% to less than 40% load is counted, the number of trips at 40% to less than 50% load is counted, and the number of trips at and greater than 50% load is counted. In one embodiment, the total number of trips at full speed with load are counted. In another embodiment the total number of trips at full speed with load and without load are counted.

Referring specifically to Figure 5, a preferred criterion for incrementing turbine trips at specified loads is illustrated. Block 221 is the start block. Block 221 indicates an attempt to start the turbine. Block 221 leads to block 223 which indicates that a trip has occurred. Block 223 leads to block 225 which represents the open or closed status of the generator breaker when the turbine trips. If the generator breaker is open, block 225 leads to block 227. Block 227 indicates whether the turbine is at a predetermined operating speed when the turbine is tripped. In a preferred embodiment, operating speed is above 95 percent of full speed. If the turbine is not at operating speed when the turbine is tripped, block 227 leads back to block 221 and the cycle is restarted. If the turbine is at operating speed, block 227 leads to block 229 which represents whether the counter is enabled. In one embodiment, the counter is enabled to avoid multiple counts. In a preferred embodiment, the counter is enabled as long as three seconds has passed after a trip. When the counter is enabled, block 229 leads to block 231 which increments, preferably by an integer, the increment full speed with no load trip counter. Block 231 then leads to block 269 which is a restart. If the turbine is restarted, block 269 is cycled back to block 221. If the turbine is not restarted, block 269 leads to block 271 where the trip criteria is complete until the turbine is started again at block 221.

Referring back to block 225, if the generator breaker is not open, block 225 leads to block 233. Block 233 indicates that the turbine is less than a specified load, denoted L1, when the turbine is tripped. If load is less than L1, block 233 leads to block 235 which represents whether the counter is enabled. When the counter is enabled, block 235 leads to block 237 which increments, preferably by an integer, the increment L1 trip counter. Block 237 then leads to block 269 which is a restart. If the turbine is restarted, block 269 is cycled back to block 221. If the turbine is not restarted, block 269 leads to block 271 where the trip criteria is complete until the turbine is started again at block 221.

If the load is greater than L1 at block 233, block 233 leads to block 243. Block 243 indicates that the turbine is within a specified load, denoted L2, when the turbine is tripped. If the load is within L2, block 243 leads to block 245 which represents whether the counter is enabled. When the counter is enabled, block 245 leads to block 247 which increments, preferably by an integer, the increment L2 trip counter. Block 247 then leads to block 269 which is a restart. If the turbine is restarted, block 269 is cycled back to block 221. If the turbine is not restarted, block 269 leads to block 271 where the trip criterion is complete until the turbine is started again at block 221.

If the load is greater than L2 at block 243, block 243 leads to block 253. Block 253 indicates that the turbine is within a specified load, denoted L3, when the turbine is tripped. If the load is within L3, block 253 leads to block 255 which represents whether the counter is enabled. When the counter is enabled, block 255 leads to block 257 which increments, preferably by an integer, the increment L3 trip counter. Block 257 then leads to block 269 which is a restart. If the turbine is restarted, block 269 is cycled back to block 221. If the turbine is not restarted, block 269 leads to block 271 where the trip criterion is complete until the turbine is started again at block 221.

If the load is greater than L3 at block 253, block 253 leads to block 263. Block 263 indicates that the turbine is within a specified load, denoted L4, when the turbine is tripped. In the illustrated embodiment L4 is the last load level and represents every load greater than L3. If the load is within L4, block 263 leads to block 267 which increments, preferably by an integer, the increment L4 trip counter. Block 267 then leads to block 269 which is a restart. If the turbine is restarted, block 269 is cycled back to block 221. If the turbine is not restarted, block 269 leads to block 271 where the trip criterion is complete until the turbine is started again at block 221.

A particularly preferred embodiment for determining operating and maintenance considerations includes monitoring successful starts, attempted starts, part load starts, base load starts, the turbine temperature starts, fast starts, base load fired time, turning gear operation time, hours based hot gas path intervals, trips, starting reliability, starts based hot gas path intervals, and starts-based rotor intervals. In a preferred embodiment, hot gas path inspection intervals can be determined by calculating the number of part load starts, base load starts, fast starts, and total trips preferable by percentage load at trip.

The necessity for hot gas inspection and maintenance is primarily a function of the starts, the nature of the start, and the trips which occur during the starts. As described supra, some starts are less damaging to the equipment and therefore, have a lower weighting in determining the equivalent starts. Provided herein is a method for weighting the starts by criteria to determine the number of equivalent starts. When the equivalent starts exceed a predetermined threshold, for example 900 equivalent starts, maintenance is indicated. In a preferred embodiment the number of equivalent starts is determined as a weighted combination of part load starts, base load starts, fast starts and trips. More particularly, the threshold is compared to a ratio of weighted equivalent starts to the total sum of part load starts and base load starts.

The weighted equivalent starts for hot gas path maintenance ($WES_h$) is determined by Formula I:

$$WES_h = w_a*PLS + w_b*BLS + w_c*FS + w_d*FSNLT + w_j*LT$$

$$FORMULA\ I$$

wherein:

$w_a$, $w_b$, $w_c$, $w_d$, and $w_j$ are weighting factors; PLS is number of part load starts, BLS is number of base load starts; FS is fast starts; FSNLT is full speed no load trips; and LT is total trips under load.

In a preferred embodiment the total trips under load may be segmented by percentage load. In a particularly preferred embodiment the total trips under load may be segmented to count separately those trips under 20 % load, from 20 to under 40% load, from 40 to under 50% load and 50% or above.

The weighted equivalent starts for hot gas path maintenance ($WES_h$) is determined by Formula II:

$$WES_h = w_a*PLS + w_b*BLS + w_c*FS + w_d*FSNLT + w_e*0LT + w_f*20LT + w_g*50LT +$$

$$w_h*40LT$$

$$FORMULA\ II$$

wherein:

$w_a$, $w_b$, $w_c$, $w_d$, $w_e$, $w_f$, $w_g$ and $w_h$ are weighting factors; PLS is number of part load starts, BLS is number of base load starts; FS is fast starts; FSNLT is full speed no load trips; 0LT is total trips at less 20% load; 20LT is total trips at 20 to less than 40% load; 40LT is total trips at 40% to less than 50% load trips; and 50LT is total trips at 50% load and higher. Alternatively, a load trip can be the summation, weighted or unweighted, of the 0LT, 20LT, 40LT and 50LT, or different increments can be employed.

With regards to the weighting factors those parameters which are more damaging to the equipment will have a higher weighting factor thereby decreasing the maintenance interval. Conversely, those parameters which are less damaging will have a lower weighting factor such that each start contributes less than a full start and the maintenance interval will not be prematurely initiated. Weighting factor $w_a$ is preferably less than unity and more preferably about 0.25 to about 0.75. Even more preferably $w_a$ is about 0.5. Weighting factor $w_b$ is preferably about unity and more preferably about 0.8 to about 1.2. Even more preferably $w_b$ is about 1. Weighting factor $w_c$ is preferably much higher than unity and even more preferably about 5 to about 35. Even more preferably $w_e$ is about 10 to about 30 and most preferably $w_c$ is about 20. Weighting factor $w_d$ is preferably about unity and even more preferably about 0.8 to about 1.2. Even more preferably $w_d$ is about 1. Weighting factor $w_e$ is preferably higher than unity and more preferably about 1 to about 3. Even more preferably $w_e$ is about 2. Weighting factor $w_f$ is preferably higher than unity and more preferably about 1 to about 10. More preferably $w_f$ is about 2 to about 7, even more preferably about 4 to about 6 and most preferably about 4.5. Weighting factor $w_g$ is preferably higher than unity and even more preferably about 1 to about 15. Even more preferably $w_g$ is about 3 to about 10, even more preferably about 8 to about 9 and most preferably about 7. Weighting factor $w_h$ is preferably higher than unity and even more preferably about 1 to about 15. Even more preferably $w_h$ is about 2 to about 10, even more preferably about 5 to about 6 and most preferably about 5.5.

The hot gas path maintenance parameter (HGPM) is determined in accordance with Formula III:

$$HGPM = WES/(PLS + BLS)$$

$$FORMULA\ III$$

wherein WES, PLS and BLS are as described supra.

When HGPM exceeds a predetermined threshold, maintenance is indicated.

As realized by one of skill in the art the inventive procedure takes into consideration the impact of various parameters on the wear of the hot gas path components. This procedure greatly improves the overall efficiency of the turbine by eliminating premature maintenance and reducing failures due to a failure to initiate timely maintenance. Furthermore, by having a predetermined threshold, maintenance can be scheduled more accurately based on the difference between the equivalent starts and the threshold.

In a preferred embodiment, rotor inspection and maintenance intervals are a function of the number of fast starts at each starting temperature, normal starts at each starting temperature and the number of trips at specified loads. As realized to one of skill in the art, different types of starts impact rotor parts differently. Prior to the present invention there has been no account for these differences. As a way of example, a start occurring shortly after shutdown, or prior to the rotating components cooling, causes less wear than a start which initiates with cool components; therefore, as the temperature decreases, the weighted starts increase. Furthermore, normal starts cause less stress than fast starts and fast starts are therefore preferably weighted at twice the level of normal starts. In a preferred embodiment the weighted equivalent starts for rotor maintenance (WES$_r$) is determined by Formula IV:

$$WES_r = (u_a*FS + u_b*NS)*(ET)$$

$$FORMULA\ IV$$

wherein $u_a$ and $u_b$ are weighting factors; FS is number of fast starts; NS is number of normal starts; ET is elapsed time from shutdown to restart.

It is preferable that $u_a$ is higher than $u_b$ to account for the increased wear resulting from a fast start relative to a normal start. It is preferable that $u_a$ is about twice $u_b$ and is most preferable that the weighting factors are normalized as would be realized to one of skill in the art. The weighted equivalent starts for rotor maintenance (WES$_r$) is compared to a threshold for rotor maintenance, for example 5000 equivalent starts. When the threshold is exceeded maintenance is indicated. As would be realized to one of skill in the art, the weighted equivalent starts for rotor maintenance would be normalized or the threshold adjusted.

In a particularly preferred embodiment, the temperature at startup is defined in increments, as described relative to Figs. 4, and 4a-4d. Using four time increments as an example WES$_r$ is determined by Formula V:

$$WES_r = u_cFT1 + u_dNT1 + u_eFT2 + u_fNT2 + u_gFT3 + u_hNT3 + u_iFT4 + u_jNT4$$

$$FORMULA\ V$$

wherein $u_c$; $u_d$; $u_e$; $u_f$; $u_g$; $u_h$; $u_i$ and $u_j$ are weighting parameters; FT1 is the number of hot fast starts; NT1 is the number of hot normal starts; FT2 is the number of warm fast starts; NT2 is the number of warm normal starts; FT3 is the number of luke warm fast starts; NT3 is the number of luke warm normal starts; FT4 is the number of cold fast starts; and NT4 is the number of cold normal starts.

It would be realized that the weighting factors at each temperature are higher for the fast starts than the normal starts and that the weighting factors increase with decreasing temperatures. In Formula V, $u_c$ is preferably about 0.8 to about 1.2, more preferably about 1; $u_d$ is preferably about 0.3 to about 0.7, more preferably about 0.5; $u_e$ is preferably about 1.4 to about 2.2, more preferably about 1.8; $u_f$ is preferably about 0.7 to about 1.1, more preferably about 0.9; $u_g$ is preferably about 2.6 to about 3.0, more preferably about 2.8; $u_h$ is preferably about 1.2 to about 1.6, more preferably about 1.4; $u_i$ is preferably about 2 to about 6, more preferably about 4; and $u_j$ is preferably about 1 to about 3, more preferably about 2.

The rotor parts maintenance parameter (RPM) is determined by Formula VI:

$$RPM = WES_r /(T1S + T2S + T3S + T4S)$$

$$FORMULA\ VI$$

wherein each of T1S, T2S, T3S, T4S are the total starts at T1, T2, T3 and T4 respectively and $WES_r$ is as described supra.

While described with particular reference to the preferred embodiments the maintenance indication procedure can be utilize broadly and in any method suitable for recording and comparing parameters. The maintenance parameters can be calculated electronically or mechanically without departing from the present invention. As would be realized, other parameters, such as fuel and environmental considerations may alter the threshold and/or the weighting of various parameters. Furthermore, certain parameters may be altered as a function of time to more accurately reflect the specifics of the application or the model and type of rotor being evaluated.

It is thus seen that this invention provides a highly accurate system and method for receiving and calculating data related to operating and maintenance considerations for gas turbines.

As the above description is exemplary in nature many variations will become apparent to those with skill in the art. Such variations however may be embodied within the scope of this invention as defined by the following appended claims.

**Claims**

1.    A process for initiating a maintenance procedure in a turbine comprising:

recording a number of part load starts (PLS), base load starts (BLS), fast starts (FS), full speed no load trips (FSNLT), and trips (LT);
forming a weighted equivalent starts as a weighted summation of said PLS, said BLS, said FS, said FSNLT, and said LT;
comparing said weighted equivalent starts to a predetermined threshold and if said weighted equivalent starts exceeds said predetermined threshold, initiating said maintenance procedure.

2.    The process for initiating a maintenance procedure of claim 1 wherein said weighted equivalent starts (WES) is determined by the formula:

$$WES = w_a*PLS + w_b*BLS + w_c*FS + w_d*FSNLT + w_j*LT$$

wherein $w_a$, $w_b$, $w_c$, $w_d$, $w_e$, $w_j$, are weighting factors.

3.    The process for initiating a maintenance procedure of claim 1 further comprising recording a number of total trips at less than 20 % load (0LT), total trips at 20% to less than 40% load (20LT), trips at 40 to less than 50 % load (40LT) and trips at 50% load or higher (50LT).

4.    The process for initiating a maintenance procedure of claim 3 wherein said weighted equivalent starts (WES) is determined by the formula:

$$WES = w_a*PLS + w_b*BLS + w_c*FS + w_d*FSNLT + w_e*0LT + w_f*20LT + w_g*50LT$$
$$+ w_h*40LT$$

wherein $w_a$, $w_b$, $w_c$, $w_d$, $w_e$, $w_f$, $w_g$ and $w_h$ are weighting factors.

5. The process for initiating a maintenance procedure of claim 4 wherein: $w_a$ is less than unity; $w_b$ is about 0.8 to about 1.2; $w_c$ is higher than unity; $w_d$ is about 0.8 to about 1.2; $w_e$ is higher than unity; $w_f$ is higher than unity; $w_g$ is higher than unity and $w_h$ is higher than unity.

6. The process for initiating a maintenance procedure of claim 4 wherein: $w_a$ is about 0.25 to about 0.75; $w_b$ is about 0.8 to about 1.2; $w_c$ is about 5 to about 35; $w_d$ is about 0.8 to about 1.2; $w_e$ is about 1 to about 3; $w_f$ is about 1 to about 10; $w_g$ is about 3 to about 10 and $w_h$ is about 2 to about 10.

7. The process for initiating a maintenance procedure of claim 1 wherein said maintenance procedure comprises hot gas path maintenance.

8. A process for initiating a maintenance requirement in a turbine comprising:

recording a number of fast starts (FS); normal starts (NS); and elapsed time starts (ET) from shutdown to restart; forming a weighted equivalent starts as a weighted combination of FS, NS, and ET; comparing said weighted equivalent starts to a predetermined threshold and if said weighted equivalent starts exceeds said predetermined threshold, initiating said maintenance procedure.

9. The process for initiating a maintenance procedure of claim 8 wherein said weighted equivalent starts ($WES_r$) is determined by the formula:

$$WES_r = (u_a {}^* FS + u_b {}^* NS) {}^* (ET)$$

wherein $u_a$ and $u_b$ are weighting factors.

10. The process for initiating a maintenance procedure of claim 8 further comprising recording a number of hot fast starts (FT1); a number of hot normal starts (NT1); a number of warm fast start (FT2); a number of warm normal starts (NT2); a number of lukewarm fast starts (FT3); a number of lukewarm normal starts (NT3); a number of cold fast starts (FT4); and a number of cold normal starts (NT4).

11. The process for initiating a maintenance procedure of claim 10 wherein said weighted equivalent starts ($WES_r$) is determined by the formula:

$$WES_r = u_c FT1 + u_d NT1 + u_e FT2 + u_f NT2 + u_g FT3 + u_h NT3 + u_i FT4 + u_j NT4$$

wherein $u_c$; $u_d$; $u_e$; $u_f$; $u_g$; $u_h$; $u_i$; and $u_j$ are weighting parameters.

12. The process for initiating a maintenance procedure of claim 11 wherein $u_c$ is about 0.8 to about 1.2; $u_d$ is about 0.3 to about 0.7; $u_e$ is about 1.4 to about 2.3; $u_f$ is about 0.7 to about 1.1; $u_g$ is about 2.6 to about 3.0 $u_h$ is about 1.2 to about 1.6; $u_i$ is about 2 to about 6 and $u_j$ is about 1 to about 3.

13. The process for initiating a maintenance procedure of claim 11 wherein a rotor parts maintenance parameter (RPM) is determined by formula:

$$RPM = WES_r / (T1S + T2S + T3S + T4S)$$

wherein T1S is the total number of hot starts, T2S is the total number of warm starts, T3S is the total number of lukewarm starts, and T4S is the total number of cold starts.

14. The process for initiating a maintenance procedure of claim 8 wherein said maintenance procedure comprises rotor maintenance.

**15.** A turbine comprising:

a part load starts counter for determining part load starts (PLS);
a base load starts counter for determining base load starts(BLS);
a full speed no load trips counter for determining full speed no load trips (FSNLT);
a trips counter for determining load trips (LT);
a normal starts counter for determining normal starts (NS); and
an elapsed time detector for determining time between shutdown and restart (ET);
a device for determining a first weighted equivalent starts as a weighted summation of said PLS, said BLS, said FS, said FSNLT, and said LT;
a device for determining a second weighted equivalent starts as a combination of FS, NS, ET;
a comparator capable of comparing said first weighted equivalent starts to a first predetermined threshold and if said first weighted equivalent starts exceeds said predetermined threshold initiating a first maintenance procedure;
a second comparator capable of comparing said second weighted equivalent starts to a second predetermined threshold and if said second weighted equivalent starts exceeds said second predetermined threshold, initiating a second maintenance procedure.

**16.** The turbine of claim 15 wherein said first weighted equivalent starts (WES) is determined by the formula:

$$WES = w_a*PLS + w_b*BLS + w_c*FS + w_d*FSNLT + w_j*LT$$

wherein $w_a$, $w_b$, $w_c$, $w_d$, $w_e$, $w_j$, are weighting factors.

**17.** The turbine of claim 15 further comprising:

a 20 % load counter for determining total trips at less than 20% load (0LT);
a 40% load counter for determining total trips at 20% to less than 40% load (20LT);
a 50% load counter for determining trips at 40 to less than 50 % load (40LT); and
load counter for determining trips at 50% load or higher (50LT).

**18.** The turbine of claim 17 wherein said weighted equivalent starts (WES) is determined by the formula:

$$WES = w_a*PLS + w_b*BLS + w_c*FS + w_d*FSNLT + w_e*0LT + w_f*20LT + w_g*50LT + w_h*40LT$$

wherein $w_a$, $w_b$, $w_e$, $w_d$, $w_e$, $w_f$, $w_g$ and $w_h$ are weighting factors.

**19.** The turbine of claim 18 wherein: $w_a$ is less than unity; $w_b$ is about 0.8 to about 1.2; $w_c$ is higher than unity; $w_d$ is about 0.8 to about 1.2; $w_e$ is higher than unity; $w_f$ is higher than unity; $w_g$ is higher than unity and $w_h$ is higher than unity.

**20.** The turbine of claim 18 wherein: $w_a$ is about 0.25 to about 0.75; $w_b$ is about 0.8 to about 1.2; $w_c$ is about 5 to about 35; $w_d$ is about 0.8 to about 1.2; $w_e$ is about 1 to about 3; $w_f$ is about 1 to about 10; $w_g$ is about 3 to about 10 and $w_h$ is about 2 to about 10.

**21.** The turbine of claim 15 wherein said weighted equivalent starts (WES$_r$) is determined by the formula:

$$WES_r = (u_a*FS + u_b*NS)*(ET)$$

wherein $u_a$ and $u_b$ are weighting factors.

**22.** The turbine of claim 15 further comprising:

a hot fast starts counter for determining the number of hot fast starts (FT1);
a hot normal starts counter for determining the number of hot normal starts (NT1);
a warm fast starts counter for determining the number of warm fast starts (FT2);
a warm normal starts counter for determining the number of warm normal starts (NT2);
a lukewarm fast starts counter for determining the number of lukewarm fast starts (FT3);
a lukewarm normal starts counter for determining the number of lukewarm normal starts (NT3);
a cold fast starts counter for determining the number of cold fast starts (FT4); and
a cold normal starts counter for determining the number of cold normal starts (NT4).

23. The turbine of claim 15 wherein said weighted equivalent starts (WES$_r$) is determined by the formula:

$$WES_r = u_c FT1 + u_d NT1 + u_e FT2 + u_f NT2 + u_g FT3 + u_h NT3 + u_i FT4 + u_j NT4$$

wherein $u_c$; $u_d$; $u_e$; $u_f$; $u_g$; $u_h$; $u_i$; and $u_j$ are weighting parameters; FT1 is the number of hot fast starts; NT1 is the number of hot normal starts; FT2 is the number of warm fast start; NT2 is the number of warm normal starts; FT3 is the number of lukewarm fast starts; NT3 is the number of lukewarm normal starts; FT4 is the number of cold fast starts and NT4 is the number of cold normal starts.

24. The turbine of claim 23 wherein $u_c$ is about 0.8 to about 1.2; $u_d$ is about 0.3 to about 0.7; $u_e$ is about 1.4 to about 2.3; $u_f$ is about 0.7 to about 1.1; $u_g$ is about 2.6 to about 3.0 $u_h$ is about 1.2 to about 1.6; $u_i$ is about 2 to about 6 and $u_j$ is about 1 to about 3.

25. The turbine of claim 15 wherein said second maintenance procedure comprises rotor maintenance.

26. The turbine of claim 15 wherein said first maintenance procedure comprises hot gas path maintenance.

**Patentansprüche**

1. Verfahren zum Einleiten eines Wartungsvorgangs in einer Turbine, umfassend:

Aufzeichnen einer Anzahl von Teillaststarts (PLS), Grundlaststarts (BLS), Schnellstarts (FS), Vollgeschwindigkeit-Leerlaufffahrten (FSNLT) und Fahrten (LT);
Bilden eines gewichteten Äquivalents Starts als eine gewichtete Summe bzw. Summierung von PLS, BLS, FS, FSNLT und LT;
Vergleichen des gewichteten Äquivalents Starts mit einem vorbestimmten Schwellenwert und falls das gewichtete Äquivalent Starts den vorbestimmten Schwellenwert überschreitet, Einleiten des Wartungsvorgangs.

2. Verfahren zum Einleiten eines Wartungsvorgangs nach Anspruch 1, wobei das gewichtete Äquivalent Starts (WES) bestimmt wird durch die Formel:

$$WES = w_a {}^* PLS + w_b {}^* BLS + w_c {}^* FS + w_d {}^* FSNLT + w_j {}^* LT$$

wobei $w_a$, $w_b$, $w_c$, $w_d$, $w_e$, $w_j$ Gewichtungsfaktoren sind.

3. Verfahren zum Einleiten eines Wartungsvorgangs nach Anspruch 1, ferner umfassend das Aufzeichnen einer Anzahl von Fahrten mit weniger als 20 % Last (0LT), Gesamtfahrten mit 20 % bis weniger als 40 % Last (20LT), Fahrten mit 40 bis weniger als 50 % Last (40LT) und Fahrten mit 50 % Last oder höher (50LT).

4. Verfahren zum Einleiten eines Wartungsvorgangs nach Anspruch 3, wobei das gewichtete Äquivalent Starts (WES) bestimmt wird durch die Formel:

$$WES = w_a*PLS + w_b*BLS + w_c*FS + w_d*FSNLT + w_e*0LT + w_f*20LT +$$
$$w_g*50LT + w_h*40LT$$

wobei $w_a$, $w_b$, $w_c$, $w_d$, $w_e$, $w_f$, $w_g$ und $w_h$ Gewichtungsfaktoren sind.

5. Verfahren zum Einleiten eines Wartungsvorgangs nach Anspruch 4, wobei $w_a$ kleiner als Eins ist; $w_b$ ca. 0,8 bis ca. 1,2 ist; $w_c$ größer als Eins ist; $w_d$ ca. 0,8 bis ca. 1,2 ist; $w_e$ größer als Eins ist; $w_f$ größer als Eins ist; $w_g$ größer als Eins ist und $w_h$ größer als Eins ist.

6. Verfahren zum Einleiten eines Wartungsvorgangs nach Anspruch 4, wobei: $w_a$ ca. 0,25 bis ca. 0,75 ist; $w_b$ ca. 0,8 bis ca. 1,2 ist; $w_c$ ca. 5 bis ca. 35 ist; $w_d$ ca. 0,8 bis ca. 1,2 ist; $w_e$ ca. 1 bis ca. 3 ist; $w_f$ ca. 1 bis ca. 10 ist; $w_g$ ca. 3 bis ca. 10 ist und $w_h$ ca. 2 bis ca. 10 ist.

7. Verfahren zum Einleiten eines Wartungsvorgangs nach Anspruch 1, wobei der Wartungsvorgang eine Heißgasweg- bzw. -kanalwartung umfasst.

8. Verfahren zum Einleiten eines Wartungserfordernisses in einer Turbine, umfassend:

   Aufzeichnen einer Anzahl von Schnellstarts (FS), Normalstarts (NS) und Verstrichene-Zeit-Starts (ET) vom Abschalten bis zum Neustart;
   Bilden eines gewichteten Äquivalents Starts als eine gewichtete Kombination von FS, NS und ET;
   Vergleichen des gewichteten Äquivalents Starts mit einem vorbestimmten Schwellenwert und falls das gewichtete Äquivalent Starts den vorbestimmten Schwellenwert überschreitet, Einleiten des Wartungsvorgangs.

9. Verfahren zum Einleiten eines Wartungsvorgangs nach Anspruch 8, wobei das gewichtete Äquivalent Starts ($WES_r$) bestimmt wird durch die Formel:

$$WES_r = (u_a*FS + u_b*NS)*(ET)$$

wobei $u_a$ and $u_b$ Gewichtungsfaktoren sind.

10. Verfahren zum Einleiten eines Wartungsvorgangs nach Anspruch 8, ferner umfassend das Aufzeichnen einer Anzahl von Heißschnellstarts (FT1), einer Anzahl von Heißnormalstarts (NT1), einer Anzahl von Warmschnellstarts (FT2), einer Anzahl von Warmnormalstarts (NT2), einer Anzahl von Lauwarmschnellstarts (FT3), einer Anzahl von Lauwarmnormalstarts (NT3), einer Anzahl von Kaltschnellstarts (FT4) und einer Anzahl von Kaltnormalstarts (NT4).

11. Verfahren zum Einleiten eines Wartungsvorgangs nach Anspruch 10, wobei das gewichtete Äquivalent Starts ($WES_r$) bestimmt wird durch die folgende Formel:

$$WES_r = u_cFT1 + u_dNT1 + u_eFT2 + u_fNT2 + u_gFT3 + u_hNT3 + u_iFT4 + u_jNT4$$

wobei $u_c$; $u_d$; $u_e$; $u_f$; $u_g$; $u_h$, $u_i$ und $u_j$ Gewichtungsparameter sind.

12. Verfahren zum Einleiten eines Wartungsvorgangs nach Anspruch 11, wobei $u_c$ ca. 0,8 bis ca. 1,2 ist; $u_d$ ca. 0,3 bis ca. 0,7 ist; $u_e$ ca. 1,4 bis ca. 2,3 ist; $u_f$ ca. 0,7 bis ca. 1,1 ist; $u_g$ ca. 2,6 bis ca. 3,0 ist; $u_h$ ca. 1,2 bis ca. 1,6 ist; $u_i$ ca. 2 bis ca. 6 ist und $u_j$ ca. 1 bis ca. 3 ist.

13. Verfahren zum Einleiten eines Wartungsvorgangs nach Anspruch 11, wobei ein Rotorenteilewartungsparameter (RPM) bestimmt wird durch die Formel:

$$RPM = WES_r /(T1S + T2S + T3S + T4S)$$

wobei T1S die Gesamtzahl an Heißstarts ist, T2S die Gesamtzahl an Warmstarts ist, T3S die Gesamtzahl an Lauwarmstarts ist und T4S die Gesamtzahl an Kaltstarts ist.

14. Verfahren zum Einleiten eines Wartungsvorgangs nach Anspruch 8, wobei der Wartungsvorgang eine Rotorwartung umfasst.

15. Turbine, umfassend:

einen Teillaststartzähler zum Bestimmen von Teillaststarts (PLS);
einen Grundlaststartzähler zum Bestimmen von Grundlaststarts (BLS);
einen Vollgeschwindigkeit-Leerlauffahrtzähler zum Bestimmen von Vollgeschwindigkeit-Leerlauffahrten (FSNLT);
einen Fahrtenzähler zum Bestimmen von Lastfahrten (LT);
einen Normalstartzähler zum Bestimmen von Normalstarts (NS); und
einen Verstrichene-Zeit-Detektor zum Bestimmen der Zeit zwischen Abschalten und Neustart (ET);
eine Vorrichtung zum Bestimmen eines ersten gewichteten Äquivalents Starts als eine gewichtete Summe bzw. Summierung von PLS, BLS, FS, FSNLT und LT;
eine Vorrichtung zum Bestimmen eines zweiten gewichteten Äquivalents Starts als eine Kombination von FS, NS, ET;
einen Vergleicher, der in der Lage ist, das erste gewichteten Äquivalents Starts mit einem ersten vorbestimmten Schwellenwert zu vergleichen und falls das erste gewichtete Äquivalent Starts den vorbestimmten Schwellenwert überschreitet, einen ersten Wartungsvorgang einzuleiten;
einen zweiten Vergleicher, der in der Lage ist, das zweite gewichteten Äquivalents Starts mit einem zweiten vorbestimmten Schwellenwert zu vergleichen und falls das zweite gewichtete Äquivalent Starts den vorbestimmten Schwellenwert überschreitet, einen zweiten Wartungsvorgang einzuleiten.

16. Turbine nach Anspruch 15, wobei das erste gewichtete Äquivalent Starts (WES) bestimmt wird durch die Formel:

$$WES = w_a*PLS + w_b*BLS + w_c*FS + w_d*FSNLT + w_j*LT$$

wobei $w_a$, $w_b$, $w_c$, $w_d$, $w_e$, $w_j$ Gewichtungsfaktoren sind.

17. Turbine nach Anspruch 15, ferner umfassend:

einen 20%-Last-Zähler zum Bestimmen von Gesamtfahrten mit weniger als 20 % Last (0LT);
einen 40%-Last-Zähler zum Bestimmen von Gesamtfahrten mit 20 % bis weniger als 40 % Last (20LT);
einen 50%-Last-Zähler zum Bestimmen von Fahrten mit 40 bis weniger als 50 % Last (40LT); und
einen Lastzähler zum Bestimmen von Fahrten mit 50 % Last oder höher (50LT).

18. Turbine nach Anspruch 17, wobei das gewichteten Äquivalent Starts (WES) bestimmt wird durch die Formel:

$$WES = w_a*PLS + w_b*BLS + w_c*FS + w_d*FSNLT + w_e*0LT + w_f*20LT + w_g*50LT + w_h*40LT$$

wobei $w_a$, $w_b$, $w_c$, $w_d$, $w_e$, $w_f$, $w_g$ und $w_h$ Gewichtungsfaktoren sind.

19. Turbine nach Anspruch 18, wobei $w_a$ kleiner als Eins ist; $w_b$ ca. 0,8 bis ca. 1,2 ist; $w_c$ größer als Eins ist; $w_d$ ca. 0,8 bis ca. 1,2 ist; $w_e$ größer als Eins ist; $w_f$ größer als Eins ist; $w_g$ größer als Eins ist und $w_h$ größer als Eins ist.

20. Turbine nach Anspruch 18, wobei: $w_a$ ca. 0,25 bis ca. 0,75 ist; $w_b$ ca. 0,8 bis ca. 1,2 ist; $w_c$ ca. 5 bis ca. 35 ist; $w_d$ ca. 0,8 bis ca. 1,2 ist; $w_e$ ca. 1 bis ca. 3 ist; $w_f$ ca. 1 bis ca. 10 ist; $w_g$ ca. 3 bis ca. 10 ist und $w_h$ ca. 2 bis ca. 10 ist.

21. Turbine nach Anspruch 15, wobei das gewichtete Äquivalent Starts ($WES_r$) bestimmt wird durch die Formel:

$$WES_r = (u_a*FS + u_b*NS)*(ET)$$

wobei $u_a$ and $u_b$ Gewichtungsfaktoren sind.

22. Turbine nach Anspruch 15, ferner umfassend:

einen Heißschnellstart-Zähler zum Bestimmen der Anzahl von Heißschnellstarts (FT1);
einen Heißnormalstart-Zähler zum Bestimmen der Anzahl von Heißnormalstarts (NT1);
einen Warmschnellstart-Zähler zum Bestimmen der Anzahl von Warmschnellstarts (FT2);
einen Warmnormalstart-Zähler zum Bestimmen der Anzahl von Warmnormalstarts (NT2);
einen Lauwarmschnellstart-Zähler zum Bestimmen der Anzahl von Lauwarmschnellstarts (FT3);
einen Lauwarmnormalstart-Zähler zum Bestimmen der Anzahl von Lauwarmnormalstarts (NT3);
einen Kaltschnellstart-Zähler zum Bestimmen der Anzahl von Kaltschnellstarts (FT4); und
einen Kaltnormalstart-Zähler zum Bestimmen der Anzahl von Kaltnormalstarts (NT4).

23. Turbine nach Anspruch 15, wobei das gewichtete Äquivalent Starts ($WES_r$) bestimmt wird durch die folgende Formel:

$$WES_r = u_cFT1 + u_dNT1 + u_eFT2 + u_fNT2 + u_gFT3 + u_hNT3 + u_iFT4 + u_jNT4$$

wobei $u_c$; $u_d$; $u_e$; $u_f$; $u_g$; $u_h$, $u_i$ und $u_j$ Gewichtungsparameter sind; FT1 die Anzahl an Heißschnellstarts ist; NT1 die Anzahl an Heißnormalstarts ist; FT2 die Anzahl an Warmschnellstarts ist; NT2 die Anzahl an Warmnormalstarts ist; FT3 die Anzahl an Lauwarmschnelistarts ist; NT3 die Anzahl an Lauwarmnormalstarts ist; FT4 die Anzahl an Kaltschnellstarts ist und NT4 die Anzahl an Kaltnormalstarts ist.

24. Turbine nach Anspruch 23, wobei $u_c$ ca. 0,8 bis ca. 1,2 ist; $u_d$ ca. 0,3 bis ca. 0,7 ist; $u_e$ ca. 1,4 bis ca. 2,3 ist; $u_f$ ca. 0,7 bis ca. 1,1 ist; $u_g$ ca. 2,6 bis ca. 3,0 ist; $u_h$ ca. 1,2 bis ca. 1,6 ist; $u_i$ ca. 2 bis ca. 6 ist und $u_j$ ca. 1 bis ca. 3 ist.

25. Turbine nach Anspruch 15, wobei der zweite Wartungsvorgang eine Rotorwartung umfasst.

26. Turbine nach Anspruch 15, wobei der erste Wartungsvorgang eine Heißgasweg- bzw. -kanalwartung umfasst.

**Revendications**

1. Procédé pour déclencher une procédure de maintenance dans une turbine, comprenant les étapes suivantes :

enregistrer un nombre de démarrages sous charge partielle (PLS), de démarrages sous charge de base (BLS), de démarrages rapides (FS), de débrayages à vide à pleine vitesse (FSNLT) et de débrayages en charge (LT) ;
déterminer un nombre de démarrages équivalents pondéré en tant que somme pondérée desdits PLS, desdits BLS, desdits FS, desdits FSNLT et desdits LT ;
comparer ledit nombre de démarrages équivalents pondéré à un seuil prédéterminé et, si ledit nombre de démarrages équivalents pondéré dépasse ledit seuil prédéterminé, déclencher ladite procédure de maintenance.

2. Procédé pour déclencher une procédure de maintenance selon la revendication 1, dans lequel ledit nombre de démarrages équivalents pondéré (WES) est déterminé par la formule :

$$WES = w_a*PLS + w_b*BLS + w_c*FS + w_d*FSNLT + W_j*LT$$

où $W_a$, $W_b$, $W_c$, $W_d$, $W_e$ et $W_j$ sont des facteurs de pondération.

**3.** Procédé pour déclencher une procédure de maintenance selon la revendication 1, consistant, en outre, à enregistrer un nombre total de débrayages sous une charge inférieure à 20 % (0LT), un nombre total de débrayages sous une charge de 20 % à moins de 40 % (20LT), un nombre total de débrayages sous une charge de 40 à moins de 50 % (40LT) et un nombre total de débrayages sous une charge égale ou supérieure à 50 % (50LT).

**4.** Procédé pour déclencher une procédure de maintenance selon la revendication 3, dans lequel ledit nombre de démarrages équivalents pondéré (WES) est déterminé par la formule :

$$WES = w_a*PLS + w_b*BLS + w_c*FS + w_d*FSNLT + W_e*0LT + W_f*20LT + W_g*50LT + w_h*40LT$$

où $W_a$, $W_b$, $W_c$, $W_d$, $W_e$, $W_f$, $W_g$ et $W_h$ sont des facteurs de pondération.

**5.** Procédé pour déclencher une procédure de maintenance selon la revendication 4, dans lequel $W_a$ est inférieur à l'unité ; $W_b$ est d'environ 0,8 à environ 1,2 ; $W_c$ est supérieur à l'unité ; $W_d$ est d'environ 0,8 à environ 1,2 ; $W_e$ est supérieur à l'unité ; $W_f$ est supérieur à l'unité, $W_g$ est supérieur à l'unité et $W_h$ est supérieur à l'unité.

**6.** Procédé pour déclencher une procédure de maintenance selon la revendication 4, dans lequel $W_a$ est d'environ 0,25 à 0,75 ; $W_b$ est d'environ 0,8 à environ 1,2 ; $W_c$ est d'environ 5 à environ 35 ; $W_d$ est d'environ 0,8 à environ 1,2 ; $W_e$ est d'environ 1 à environ 3 ; $W_f$ est d'environ 1 à environ 10 ; $W_g$ est d'environ 3 à environ 10 et $W_h$ est d'environ 2 à environ 10.

**7.** Procédé pour déclencher une procédure de maintenance selon la revendication 1, dans lequel ladite procédure de maintenance comprend la maintenance des parties chaudes de la turbine.

**8.** Procédé pour déclencher un besoin en maintenance dans une turbine, comprenant les étapes suivantes :

enregistrer un nombre de démarrages rapides (FS) ; de démarrages normaux (NS) ; et de démarrages «temps écoulé» (ET) entre l'arrêt et le redémarrage ;
déterminer un nombre de démarrages équivalents pondéré en tant que combinaison pondérée de FS, NS et ET ;
comparer ledit nombre de démarrages équivalents pondéré à un seuil prédéterminé et si ledit nombre de démarrages équivalents pondéré dépasse ledit seuil prédéterminé, déclencher ladite procédure de maintenance.

**9.** Procédé pour déclencher une procédure de maintenance selon la revendication 8, dans lequel ledit nombre de démarrages équivalents pondéré est déterminé par la formule :

$$WES_r = (u_a*FS + u_b*NS)*(ET)$$

où $u_a$ et $u_b$ sont des facteurs de pondération.

**10.** Procédé pour déclencher une procédure de maintenance selon la revendication 8, consistant, en outre, à enregistrer un nombre de démarrages rapides à température très élevée (FT1) ; un nombre de démarrages normaux à température très élevée (NT1) ; un nombre de démarrages rapides à température élevée (FT2) ; un nombre de démarrages normaux à température élevée (NT2) ; un nombre de démarrages rapides à tiède (FT3) ; un nombre de démarrages normaux à tiède (NT3) ; un nombre de démarrages rapides à froid (FT4) ; et un nombre de démarrages normaux à froid (NT4).

**11.** Procédé pour déclencher une procédure de maintenance selon la revendication 10, dans lequel ledit nombre de démarrages équivalents pondéré (WES$_r$) est déterminé par la formule :

$$WES_r = u_cFT1 + u_dNT1 + u_eFT2 + u_fNT2 + u_gFT3 + u_hNT3 + u_iFT4 + u_jNT4$$

où $u_c$ ; $u_d$ ; $u_e$ ; $u_f$ ; $u_g$ ; $u_h$ ; $u_i$ et $u_j$ sont des facteurs de pondération.

**12.** Procédé pour déclencher une procédure de maintenance selon la revendication 11, dans lequel $u_c$ est d'environ 0,8 à environ 1,2 ; $u_d$ est d'environ 0,3 à environ 0,7 ; $u_e$ est d'environ 1,4 à environ 2,3 ; $u_f$ est d'environ 0,7 à environ 1,1 ; $u_g$ est d'environ 2,6 à environ 3 ; $u_h$ est d'environ 1,2 à environ 1,6, $u_i$ est d'environ 2 à environ 6 et $u_j$ est d'environ 1 à environ 3.

**13.** Procédé pour déclencher une procédure de maintenance selon la revendication 11, dans lequel un paramètre de maintenance de pièces de rotor (RPM) est déterminé par la formule :

$$RPM = WES_r /(T1S = T2S + T3S + T4S)$$

où T1S est le nombre total de démarrages à température très élevée, T2S est le nombre total de démarrages à température élevée, T3S est le nombre total de démarrages à tiède et T4S est le nombre total de démarrages à froid.

**14.** Procédé pour déclencher une procédure de maintenance selon la revendication 8, dans lequel ladite procédure de maintenance comprend la maintenance du rotor.

**15.** Turbine comprenant :

un compteur de démarrages sous charge partielle pour déterminer les démarrages sous charge partielle (PLS) ;
un compteur de démarrages sous charge de base pour déterminer les démarrages sous charge de base (BLS) ;
un compteur de débrayages à vide à pleine vitesse pour déterminer les débrayages à vide à pleine vitesse (FSNLT) ;
un compteur de débrayages pour déterminer les débrayages en charge (LT) ;
un compteur de démarrages normaux pour déterminer les démarrages normaux (NS) ; et
un détecteur de temps écoulé pour déterminer le temps entre un arrêt et un redémarrage (ET) ;
un dispositif pour déterminer un premier nombre de démarrages équivalents pondéré en tant que somme pondérée desdits PLS, desdits BLS, desdits FS, desdits FSNLT et desdits LT ;
un dispositif pour déterminer un second nombre de démarrages équivalents pondéré en tant que combinaison de FS, NS, ET ;
un comparateur capable de comparer ledit premier nombre de démarrages équivalents pondéré à un premier seuil prédéterminé et si ledit premier nombre de démarrages équivalents pondéré dépasse ledit seuil prédéterminé, déclencher une première procédure de maintenance ;
un second comparateur capable de comparer ledit second nombre de démarrages équivalents pondéré à un second seuil prédéterminé et si ledit second nombre de démarrages équivalents pondéré dépasse ledit second seuil prédéterminé, déclencher une seconde procédure de maintenance.

**16.** Turbine selon la revendication 15, dans laquelle ledit premier nombre de démarrages équivalents pondéré (WES) est déterminé par la formule :

$$WES = w_a*PLS + w_b*BLS + w_c*FS + w_d*FSNLT+W_j*LT$$

où $W_a$, $W_b$, $W_c$, $W_d$, $W_e$ et $W_j$ sont des facteurs de pondération.

**17.** Turbine selon la revendication 15, comprenant, en outre :

un compteur sous charge de 20 % pour déterminer le nombre total de débrayages sous une charge inférieure à 20 % (0LT) ;
un compteur sous charge de 40 % pour déterminer le nombre total de débrayages sous charge de 20 % à moins de 40 % (20LT) ;
un compteur sous charge de 50 % pour déterminer le nombre de débrayages sous charge de 40 à moins de 50 % (40LT) ; et
un compteur en charge pour déterminer le nombre de débrayages sous charge égale ou supérieure à 50 % (50LT).

**18.** Turbine selon la revendication 17, dans laquelle ledit nombre de démarrages équivalents pondéré (WES) est déterminé par la formule :

$$WES = w_a*PLS + w_b*BLS + w_c*FS + w_d*FSNLT + W_e*0LT + W_f*20LT + W_g*50LT + W_h*40LT$$

où $W_a$, $W_b$, $W_c$, $W_d$, $W_e$ , $W_f$ , $W_g$ et $W_h$ sont des facteurs de pondération.

**19.** Turbine selon la revendication 18, dans laquelle $W_a$ est inférieur à l'unité ; $W_b$ est d'environ 0,8 à environ 1,2 ; $W_c$ est supérieur à l'unité ; $W_d$ est d'environ 0,8 à environ 1,2 ; $W_e$ est supérieur à l'unité ; $W_f$ est supérieur à l'unité, $W_g$ est supérieur à l'unité et $W_h$ est supérieur à l'unité.

**20.** Turbine selon la revendication 18, dans laquelle $W_a$ est d'environ 0,25 à 0,75 ; $W_b$ est d'environ 0,8 à environ 1,2 ; $W_c$ est d'environ 5 à environ 35 ; $W_d$ est d'environ 0,8 à environ 1,2 ; $W_e$ est d'environ 1 à environ 3 ; $W_f$ est d'environ 1 à environ 10, $W_g$ est d'environ 3 à environ 10 et $W_h$ est d'environ 2 à environ 10.

**21.** Turbine selon la revendication 15, dans laquelle ledit nombre de démarrages équivalents pondéré ($WES_r$ ) est déterminé par la formule :

$$WES_r = (u_a*FS + u_b*NS)*(ET)$$

où $u_a$ et $u_b$ sont des facteurs de pondération.

**22.** Turbine selon la revendication 15, comprenant, en outre :

un compteur de démarrages rapides à température très élevée pour déterminer le nombre de démarrages rapides à température très élevée (FT1);
un compteur de démarrages normaux à température très élevée pour déterminer le nombre de démarrages normaux à température très élevée (NT1);
un compteur de démarrages rapides à température élevée pour déterminer le nombre de démarrages rapides à température élevée (FT2) ;
un compteur de démarrages normaux à température élevée pour déterminer le nombre de démarrages normaux à température élevée (NT2) ;
un compteur de démarrages rapides à tiède pour déterminer le nombre de démarrages rapides à tiède (FT3) ;
un compteur de démarrages normaux à tiède pour déterminer le nombre de démarrages normaux à tiède (NT3) ;
un compteur de démarrages rapides à froid pour déterminer le nombre de démarrages rapides à froid (FT4) ; et
un compteur de démarrages normaux à froid pour déterminer le nombre de démarrages normaux à froid (NT4).

**23.** Turbine selon la revendication 15, dans laquelle ledit nombre de démarrages équivalents pondéré ($WES_r$ ) est déterminé par la formule :

$$\mathrm{WES_r = u_cFT1 + u_dNT1 + u_eFT2 + u_fNT2 + u_gFT3 + u_hNT3 + u_iFT4 + u_jNT4}$$

où $u_c$ ; $u_d$ ; $u_e$ ; $u_f$ ; $u_g$ ; $u_h$ ; $u_i$ et $u_j$ sont des facteurs de pondération ; FT1 est le nombre de démarrages rapides à température très élevée ; NT1 le nombre de démarrages normaux à température très élevée ; FT2 le nombre de démarrages rapides à température élevée ; NT2 le nombre de démarrages normaux à température élevée ; FT3 le nombre de démarrages rapides à tiède ; NT3 le nombre de démarrages normaux à tiède ; FT4 le nombre de démarrages rapides à froid, et NT4 le nombre de démarrages normaux à froid.

**24.** Turbine selon la revendication 23, dans laquelle $u_c$ est d'environ 0,8 à environ 1,2 ; $u_d$ est d'environ 0,3 à environ 0,7 ; $u_e$ est d'environ 1,4 à environ 2,3 ; $u_f$ est d'environ 0,7 à environ 1,1 ; $u_g$ est d'environ 2,6 à environ 3 ; $u_h$ est d'environ 1,2 à environ 1,6 ; $u_i$ est d'environ 2 à environ 6 et $u_j$ est d'environ 1 à environ 3.

**25.** Turbine selon la revendication 15, dans laquelle ladite seconde procédure de maintenance comprend la maintenance du rotor.

**26.** Turbine selon la revendication 15, dans laquelle ladite première procédure de maintenance comprend la maintenance des parties chaudes de la turbine.

**FIG. 1**

```
                    ┌──────────────┐
          ┌────────▶│    START     │╮ 1
          │         └──────┬───────┘
          │                │
          │         ┌──────▼───────┐
          │         │   FLAME ON   │╮ 3
          │         └──────┬───────┘
          │                │
          │         ┌──────▼───────┐
          │         │ FIRING TIMER ON │╮ 5
          │         └──────┬───────┘
          │            7 ╮ │
          │      NO  ┌──────▼───────┐  YES
          │    ┌─────│     TEST     │─────┐
          │    │     └──────────────┘     │
          │  9╮│                          │
          │ ┌──▼───────────┐  NO  ┌───────▼──────┐  NO
          │ │  GENERATOR    │─────▶│ FULL SPEED NO │────┐
          │ │ BREAKER CLOSED│      │     LOAD      │    │
          │ └───────┬──────┘       └───────┬──────┘ 11 │
          │      YES│       NO          YES│           │
          │         │       ┌──────────────▼──┐        │
          │         │       │    SHUTDOWN      │╮ 13    │
          │         │       └───────┬──────────┘        │
          │         │            YES│                   │
          │         │     ┌──────────▼──────┐           │
          │         └────▶│   SUCCESSFUL     │◀──────────┘
          │               │     START        │
          │               └────────┬─────────┘ 15
          │               ┌────────▼─────────┐
          │               │   INCREMENT      │
          │               │ SUCCESSFUL STARTS│╮ 17
          │               │  LIFE COUNTER    │
          │               └────────┬─────────┘
          │               ┌────────▼─────┐  YES  ┌────────────────┐
          │               │    RESET     │──────▶│ RESET SUCCESSFUL│
          │               └──────┬───────┘       │ STARTS PERIODIC │╮ 21
          │                   NO │           19   │   COUNTER       │
          │               ┌──────▼──────────┐     └────────┬────────┘
          │               │   INCREMENT      │◀────────────┘
          │               │ SUCCESSFUL STARTS│
          │               │ PERIODIC COUNTER │╮ 23
          │               └──────┬───────────┘
          │               ┌──────▼───────┐
          │               │   SHUTDOWN   │╮ 25
          │               └──────┬───────┘
          │          YES  ┌──────▼───────┐
          └───────────────│   RESTART    │◀──────
                          └──────┬───────┘ 27
                              NO │
                          ┌──────▼───────┐
                          │   COMPLETE   │╮ 29
                          └──────────────┘
```

**FIG. 2**

**FIG. 3**

**FIG. 4**

## FIG. 4A

```
  ┌─────┐                          ┌─────┐
  │  E  │                          │  A  │
  └─────┘                          └─────┘
       151                              113
              NO      ┌──────────┐
         ◄────────────│  FIRED   │
                      │  STARTS  │
                      └──────────┘
                          131
                         YES
                      ┌──────────┐
                      │  FIRING  │
                      │  TIMER   │
                      └──────────┘
                          133
                      ┌──────────┐
                      │   T1     │
                      │  START   │
                      └──────────┘
                          135
                   ┌────────────────┐
                   │   T1 STARTS    │
                   │  LIFE COUNTER  │
                   └────────────────┘
                          137
                ┌──────────────────────┐
                │   AUXILIARY SIGNAL    │
                └──────────────────────┘
                          139
  ┌───────────┐   NO  ┌──────────────┐
  │ NORMAL T1 │◄──────│ FAST T1 STARTS│
  │  STARTS   │       │   COUNTER     │
  │ COUNTER   │       └──────────────┘
  └───────────┘           141
       143               YES
                      ┌──────────┐  YES  ┌──────────────┐
                      │  RESET   │──────►│ RESET T1 STARTS│
                      └──────────┘       │   PERIODIC    │
       145               NO              │   COUNTER     │
                                         └──────────────┘
                   ┌────────────────┐        147
                   │ INCREMENT T1   │
                   │ STARTS PERIODIC│◄───
                   │   COUNTER      │
                   └────────────────┘
                          149
```

## FIG. 4B

EP 1 815 376 B1

## FIG. 4C

```
                              ┌─────────┐
                              │    C    │  121
                              └────┬────┘
    ┌─────┐                        │
    │  E  │  151         NO   ┌────▼────────┐
    └──▲──┘◄───────────────── │ FIRED STARTS│  175
       │                      └────┬────────┘
       │                      YES  │
       │                      ┌────▼────────┐
       │                      │ FIRING TIMER│  177
       │                      └────┬────────┘
       │                      ┌────▼────────┐
       │                      │  T3 START   │  179
       │                      └────┬────────┘
       │                   ┌───────▼──────┐
       │                   │ T3 STARTS LIFE│
       │                   │   COUNTER     │  181
       │                   └───────┬──────┘
       │                  ┌────────▼────────┐
       │                  │ AUXILIARY SIGNAL │  183
       │                  └────────┬────────┘
  ┌────────────┐    NO   ┌─────────▼────────┐
  │  NORMAL T3 │◄─────── │  FAST T3 STARTS  │
  │STARTS COUNTER│       │    COUNTER       │  185
  └──────┬─────┘         └─────────┬────────┘
    187  │                   YES   │
         │              ┌──────────▼────┐  YES  ┌──────────────┐
         └─────────────►│     RESET     │──────►│RESET T3 STARTS│
                        └──────┬────────┘       │   PERIODIC    │
                          NO   │   189          │   COUNTER     │  191
                        ┌──────▼────────┐        └──────┬───────┘
                        │ INCREMENT T3  │               │
                        │STARTS PERIODIC│◄──────────────┘
                        │   COUNTER     │  193
                        └───────────────┘
```

**FIG. 4D**

FIG. 5

**EP 1 815 376 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2004181369 A